# EUROPEAN PATENT APPLICATION

(11) **EP 4 108 980 A1**
(43) Date of publication of application: **28.12.2022**
(21) Application number: 21757636.2
(22) Date of filing: 12.02.2021
(51) Int. Cl.: F21S 2/00, F21V 5/00, G02F 1/13, G02F 1/13357, H05B 47/00, F21Y 115/10

(54) **LIGHT SOURCE DEVICE AND IMAGE DISPLAY DEVICE**

(30) Priority: 21.02.2020 JP 2020028435
(71) Applicant: Sony Group Corporation, Tokyo 108-0075 (JP)
(72) Inventor: OHKAWA, Shingo, Tokyo 108-0075 (JP)
(74) Representative: D Young & Co LLP
(86) International application number: PCT/JP2021/005307
(87) International publication number: WO 2021/166807

(57) **Abstract**

A light source apparatus according to an embodiment of the present technology includes one or more light emitting portions and one or more optical members. The one or more light emitting portions emit divergent light including a plurality of lights having different emission angles with respect to an optical axis. The one or more optical members are arranged on the optical axis of each of the one or more light emitting portions, and have an incident surface, an inner side surface, and an emission surface. On the incident surface, the divergent light emitted from the light emitting portion is incident. The inner side surface reflects the divergent light incident on the incident surface inside the optical member. The emission surface emits the divergent light reflected by the inner side surface in a direction of the optical axis. Each of the one or more optical members are configured such that each of the plurality of lights having different emission angles emitted from the emission surface is irradiated to an irradiation range corresponding to the emission angle with reference to a position of the optical axis. Each of the one or more optical members is configured such that a size of the irradiation range corresponding to the emission angle of each of the plurality of lights has a predetermined distribution.

## Description

### Technical Field

The present technology relates to a light source apparatus and an image display apparatus.

### Background Art

Patent Literature 1 discloses a light intensity distribution control element that can be used in a light projector or the like. The light intensity distribution control element reflects light emitted at a large angle with an optical axis from a light emitting element of an LED or the like by reflecting in a concave mirror and propagates the light. The propagating light is refracted and emitted so as to be parallel to the optical axis in a concave lens. With such a configuration, it is possible to efficiently emit forward the light projected from the light emitting element, and to obtain the emitted light having high power density (Patent Literature 1, specification paragraphs [0014] and [0017], Figs. 1 and 10, and the like).

### Citation List

### Patent Literature

Patent Literature 1: Japanese Patent Application Laid-open No. 9-304609

### Disclosure of Invention

### Technical Problem

Thus, in the apparatus for emitting light, a technique capable of controlling a state of the emitted light is required.

In view of the above circumstances, an object of the present technology is to provide a light source apparatus and an image display apparatus capable of controlling the state of the emitted light.

### Solution to Problem

In order to achieve the above-described object, a light source apparatus according to an embodiment of the present technology includes one or more light emitting portions and one or more optical members.

The one or more light emitting portions emit divergent light including a plurality of lights having different emission angles with respect to an optical axis.

The one or more optical members are arranged on the optical axis of each of the one or more light emitting portions, and have an incident surface, an inner side surface, and an emission surface.

On the incident surface, the divergent light emitted from the light emitting portion is incident.

The inner side surface reflects the divergent light incident on the incident surface inside the optical member.

The emission surface emits the divergent light reflected by the inner side surface in a direction of the optical axis.

Each of the one or more optical members are configured such that each of the plurality of lights having different emission angles emitted from the emission surface is irradiated to an irradiation range corresponding to the emission angle with reference to a position of the optical axis.

Each of the one or more optical members is configured such that a size of the irradiation range corresponding to the emission angle of each of the plurality of lights has a predetermined distribution.

In this light source apparatus, the optical member having the incident surface, the inner side surface, and the emission surface is arranged on the optical axis of the light emitting portion for emitting the divergent light. The optical member is configured such that each of the plurality of lights included in the divergent light is irradiated in the irradiation range corresponding to the emission angle. The optical member is configured such that the size of the irradiation range of each of the plurality of lights has the predetermined distribution.

This makes it possible to control the state of the emitted light emitted from the emission surface.

The irradiation range corresponding to the emission angle of each of the plurality of lights may be configured with the position of the optical axis as a center.

Each of the one or more optical members may be configured such that a difference between a maximum value and a minimum value of the size of the irradiation range corresponding to the emission angle of each of the plurality of lights is larger than a predetermined threshold value, and the size of the irradiation range corresponding to the emission angle may be continuously distributed between the maximum value and the minimum value.

Each of the one or more optical members may be configured such that a difference between a maximum value and a minimum value of a maximum distance from the position of the optical axis of the irradiation range corresponding to the emission angle of each of the plurality of lights is larger than a predetermined threshold value, and the maximum distance from the position of the optical axis of the irradiation range corresponding to the emission angle may be continuously distributed between the maximum value and the minimum value.

Each of the one or more optical members may be configured such that the irradiation range corresponding to the emission angle of each of the plurality of lights is different from each other.

Each of the one or more optical members may be configured such that illuminance of the divergent light emitted from the emission surface and irradiated on an irradiated surface arranged on the optical axis becomes maximum at the position of the optical axis on the irradiated surface and continuously decreases as away from the position of the optical axis.

Each of the one or more optical members may be configured such that a ratio of decreasing the illuminance of the divergent light irradiated on the irradiated surface as away from the position of the optical axis falls within a predetermined range.

Each of the one or more optical members may have a shape of a rotating body having the optical axis as a center axis.

Each of the one or more optical members may have a bullet shape having the optical axis as the center axis.

The incident surface may have a concave shape with a position on the optical axis as an apex, when viewed from a light emitting portion side along the direction of the optical axis.

The incident surface may have a lens surface protruding on an optical axis side from the apex to an end of the light emitting portion side.

The emission surface may have a concave shape with the position on the optical axis as the center, when viewed from a side from which the divergent light is emitted along the direction of the optical axis.

The emission surface may have a concave lens surface with respect to the optical axis from the center to an end on the side from which the divergent light is emitted.

The inner side surface may be configured to surround the optical axis and may have a concave reflective surface with respect to the optical axis.

The inner side surface may be configured such that an inclination angle with respect to the optical axis changes continuously from an incident surface side to an emission surface side.

The inner side surface may be configured such that a rate of change of the inclination angle with respect to the optical axis is continuously small from the incident surface to the emission surface in an optical axis cross-section.

Each of the one or more light emitting portions may have an emission region for emitting the divergent light and may emit the divergent light with each point within the emission region as an emission point.

The one or more light emitting portions may be a plurality of light emitting portions. In this case, the one or more optical members may be a plurality of optical members. Furthermore, the light source apparatus may further include an emission control portion capable of individually controlling driving of each of the plurality of light emitting portions.

The emission control portion may be capable of executing a control in a local dimming method.

An image display apparatus according to an embodiment of the present technology includes the light source apparatus, an image generating system, and a projection system.

The image generating system generates an image based on light from the light source apparatus.

The projection system projects an image generated by the image generation system.

### Brief Description of Drawings

[Fig. 1] Fig. 1 is a schematic view showing a configuration example of an image display apparatus according to a first embodiment of the present technology.
[Fig. 2] Fig. 2 is a schematic view showing a configuration example of a light source unit.
[Fig. 3] Fig. 3 is a schematic view showing a configuration example of a light source substrate.
[Fig. 4] Fig. 4 is a schematic view showing a magnification changing optical system.
[Fig. 5] Fig. 5 is an enlarged view of an LED.
[Fig. 6] Fig. 6 is schematic views each showing a die of the LED.
[Fig. 7] Fig. 7 is schematic views each showing a configuration example of a light beam control member.
[Fig. 8] Fig. 8 is schematic views each showing a configuration example of an incident surface.
[Fig. 9] Fig. 9 is schematic views each showing a configuration example of an emission surface 47.
[Fig. 10] Fig. 10 is a schematic view showing an optical path of light in a light beam control member.
[Fig. 11] Fig. 11 is a graph showing a relationship between an emission angle and an angle formed between an optical axis and a reflected light reflected by an inner side surface.
[Fig. 12] Fig. 12 is views each for explaining a light beam traveling on an optical axis cross-section.
[Fig. 13] Fig. 13 is schematic views each showing an example of an optical path of light emitted from the optical axis and traveling on the optical axis cross-section.
[Fig. 14] Fig. 14 is schematic views each showing an example of an optical axis line.
[Fig. 15] Fig. 15 is schematic views each showing an irradiation range when a light having an emission angle of +10 degrees and a light having an emission angle of -10 degrees are emitted.
[Fig. 16] Fig. 16 is schematic views each for explaining an irradiation range when a light having an emission angle of n degrees is emitted from each emission point of a die.
[Fig. 17] Fig. 17 is schematic views each showing an irradiation range when a light having an emission angle of +30 degrees and a light having an emission angle of -30 degrees are emitted with reference to each optical axis line.
[Fig. 18] Fig. 18 is schematic views each showing an irradiation range when a light having an emission angle of +50 degrees and a light having an emission angle of -50 degrees are emitted with reference to each optical axis line.
[Fig. 19] Fig. 19 is schematic views each for explaining a configuration example for changing an optical axis range in accordance with the emission angle.
[Fig. 20] Fig. 20 is a graph showing a relationship between the emission angle and the optical axis range.
[Fig. 21] Fig. 21 is schematic views each showing an illuminance distribution of divergent light irradiated on an irradiated surface.
[Fig. 22] Fig. 22 is a graph showing the illuminance distributions in the H-H lines shown in Figs. 21A and B.
[Fig. 23] Fig. 23 is a graph showing a relationship between an emission angle and an optical axis range in Comparative Example.
[Fig. 24] Fig. 24 is schematic views each showing an illuminance distribution of divergent light irradiated on an irradiated surface in Comparative Example.
[Fig. 25] Fig. 25 is a graph showing the illuminance distributions in an H-H lines shown in Fig. 24A and B.
[Fig. 26] Fig. 26 is graphs each showing a relationship between an emission angle and an optical axis range in other embodiments.
[Fig. 27] Fig. 27 is schematic views each showing an example of the optical path of light emitted from the optical axis and traveling on the optical axis cross-section when a light beam control member according to the second embodiment is used.
[Fig. 28] Fig. 28 is an enlarged view of the incident surface in the optical axis cross-section.
[Fig. 29] Fig. 29 is schematic views each for explaining a configuration example for changing the optical axis range in accordance with the emission angle.
[Fig. 30] Fig. 30 is a graph showing a relationship between the emission angle and the optical axis range.
[Fig. 31] Fig. 31 is schematic views each showing the illuminance distribution of the divergent light irradiated on the irradiated surface.
[Fig. 32] Fig. 32 is a graph showing the illuminance distributions in the H-H lines shown in Fig. 31A and B.
[Fig. 33] Fig. 33 is a graph showing a relationship between the emission angle and an optical axis line range when the light beam control member according to the third embodiment of the present technology is used.
[Fig. 34] Fig. 34 is schematic views each showing the illuminance distribution of a divergent light E irradiated on the irradiated surface.
[Fig. 35] Fig. 35 is a graph showing the illuminance distributions in the H-H lines shown in Fig. 34A and B.
[Fig. 36] Fig. 36 is a schematic view showing an outline of the light beam control member arranged with respect to a plurality of LEDs.
[Fig. 37] Fig. 37 is a cross-sectional view taken along the line J-J shown in Fig. 36.
[Fig. 38] Fig. 38 is a schematic view showing a configuration example of a light source unit according to other embodiment.
[Fig. 39] Fig. 39 is a schematic view showing a configuration example of an image display apparatus according to other embodiment.
[Fig. 40] Fig. 40 is schematic views each showing a configuration example of an illumination apparatus according to the present technology.
[Fig. 41] Fig. 41 is schematic views each showing an example of the illumination apparatus.
[Fig. 42] Fig. 42 is schematic views each showing an example of the illumination apparatus.

### Mode(s) for Carrying Out the Invention

Embodiments according to the present technology will be described below with reference to the drawings.

### <First Embodiment>

### [Configuration of Image Display Apparatus]

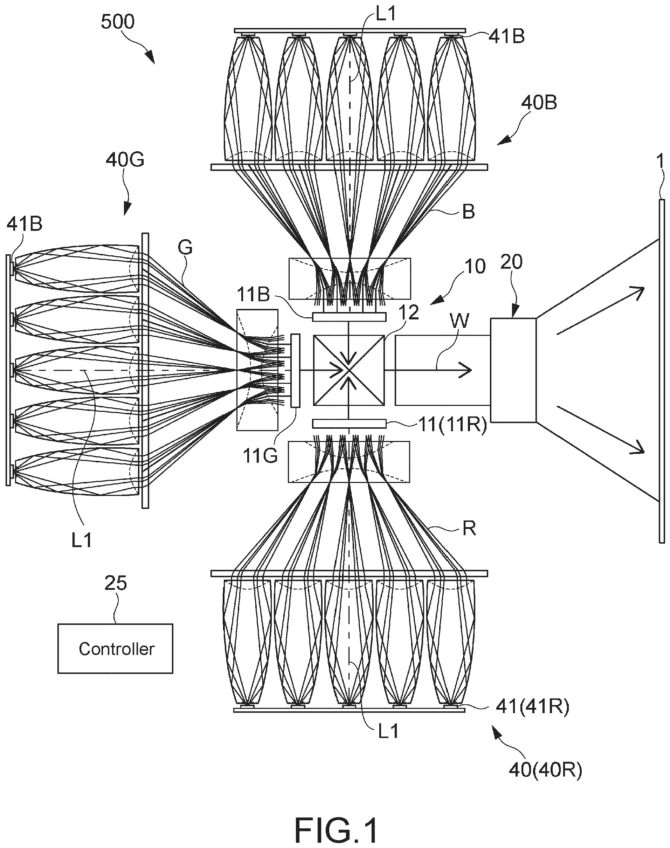

Fig. 1 is a schematic view showing a configuration example of an image display apparatus according to a first embodiment of the present technology.

An image display apparatus 500 may be used, for example, as a projector for a presentation or a digital cinema. The present technology described below is also applicable to an image display apparatus used for other applications.

The image display apparatus 500 includes three light source units 40, an image generating system 10, a projection system 20, and a controller 25.

The three light source units 40 include a light source unit 40R for emitting a red light R, a light source unit 40G for emitting a green light G, and a light source unit 40B for emitting a blue light B.

Each of the three light source units 40 has a plurality of LEDs (Light Emitting Diodes) 41, and is capable of irradiating an emitted light from the LEDs 41 to a predetermined irradiation range.

The light source unit 40R has a plurality of red LEDs 41R capable of emitting the red light R, and irradiates the red light R.

The light source unit 40G has a plurality of green LEDs 41G capable of emitting the green light G, and is capable of irradiating the green light G.

The light source unit 40B has a plurality of blue LEDs 41B capable of emitting the blue light B, and is capable of irradiating the blue light B.

Configurations of the light source units 40R, 40G, and 40G are substantially equal to each other.

The image generating system 10 is capable of generating an image based on the red light R, the green light G, and the blue light B emitted from the three light source units 40.

In the example shown in Fig. 1, the image generating system 10 includes three transmissive light modulators 11, and a dichroic prism 12.

Three light modulators 11 include a light modulator 11R for the red light, a light modulator 11G for the green light, and a light modulator 11B for the blue light.

The three light modulators 11 transmit by modulating the light incident based on an image signal corresponding to each color supplied from the outside. The modulated light is emitted as an image light (light constituting image).

The light modulator 11R modulates the red light R emitted from the light source unit 40R, and emits a red image light constituting the red image.

The light modulator 11G modulates the green light G emitted from the light source unit 40B, and emits a green image light constituting the green image.

The light modulator 11B modulates the blue light B emitted from the light source unit 40B, and emits a blue image light constituting the blue image.

The light modulator is also referred to as a spatial modulator.

The light modulator 11 has a pixel region capable of modulating the incident light. The light irradiated to the pixel region is modulated for each pixel, and the image light is generated.

The light source unit 40 for emitting each color light of RGB and the light modulator 11 for each color light have positions appropriately designed each other so that the light emitted from the light source unit 40 is irradiated to the pixel region of the light modulator 11.

In the present embodiment, with respect to the pixel region of the light modulator 11, the light source unit 40 is arranged so that optical axes L1 of the light source units 40 intersect substantially perpendicular.

In the present embodiment, so as to surround a dichroic prism 12 from three sides, the three light modulators 11R, 11G, and 11B for each color light of the RGB are arranged. Then, the light source units 40R, 40G, and 40B are arranged at positions capable of irradiating color lights corresponding to the respective pixel regions of the light modulators 11R, 11G, and the 11B.

As shown in Fig. 1, so as to sandwich the dichroic prism 12, the light source units 40R and 40B are arranged to face each other. The light source unit 40G is arranged toward the dichroic prism 12 from a direction substantially perpendicular to the light source units 40R and 40B facing each other.

On the optical axis L1 of the light source unit 40R, the optical modulator 11R is arranged.

On the optical axis L1 of the light source unit 40G, the optical modulator 11G is arranged.

On the optical axis L1 of the light source unit 40R, the optical modulator 11B is arranged.

Thus, the red image light, the blue image light, and green image light generated by the three light modulators 11R, 11G, and 11B for each color light of the RGB from three directions are incident on the dichroic prism 12.

The dichroic prism 12 is composed, for example, by bonding a plurality of glass prisms (four right-angled isotopic prisms having substantially same shapes). Two interference films having predetermined optical characteristics are formed on a bonding surface of each glass prism.

The first interference film reflects the blue light B and causes to transmit the red light R and the green light G. The second interference film reflects the red light R and causes to transmit the blue light B and the green light G.

Therefore, the red image light and the blue image light are reflected by the bonding surface, the green image light G is transmitted through the bonding surface. As a result, the image lights of respective colors of RGB are combined on the same optical path, and an image light W forming a color image is generated.

The projection system 20 projects the image (image light W) generated by the image generation system 10. The projection system 20 has a plurality of lenses (not shown) or the like, enlarges the image light W to a predetermined magnification, projects on a projection object 1 such as a screen. In this way, a full-color image is displayed.

The controller 25 includes hardware necessary for configuring a computer such as a processor such as a CPU, a GPU, a DSP, a memory such as a ROM or a RAM, and a storage device such as an HDD.

For example, when the CPU or the like loads and executes a control program or the like recorded in advance in the ROM or the like, it is possible to control respective mechanisms in the image display apparatus 500.

A configuration of the controller 25 is not limited and any hardware and software may be used. Of course, hardware such as an FPGA or an ASIC may be used. Also, within the image display apparatus 500, a position where the controller 25 is configured is not limited and may be arbitrarily designed.

The program is installed in the image display apparatus 500 via various recording media, for example. Alternatively, the installation of the program may be performed via, for example, the Internet.

The type and the like of the recording medium that records the program are not limited, and any computer-readable recording medium may be used. For example, any non-transitory computer-readable recording medium may be used.

In the present embodiment, the controller 25 allows to control driving of each of the light source unit 40 of RGB and each of the light modulator 11 of RGB.

In particular, for each light source unit 40, driving of a plurality of LEDs 41 included in the light source unit 40 can be individually controlled. That is, in the present embodiment, for the plurality of LEDs 41, it is possible to perform a control of the local dimming (partial driving) method.

In the present embodiment, each light source unit 40 corresponds to an embodiment of the light source apparatus according to the present technology.

The controller 25 corresponds to an embodiment of the emission control portion according to the present technology.

### [Light source unit]

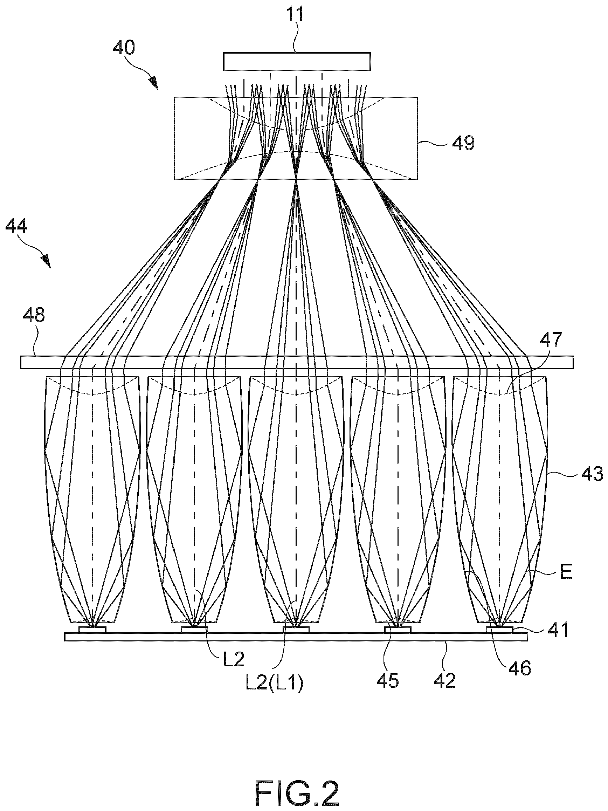

Fig. 2 is a schematic view showing a configuration example of the light source unit 40.

In the following, three light source units 40R, 40G, and 40G will be described as a common configuration example.

As shown in Fig. 2, the light source unit 40 includes a light source substrate 42 in which the plurality of LEDs 41 is mounted, a plurality of light beam control members 43, and a magnification changing optical system 44.

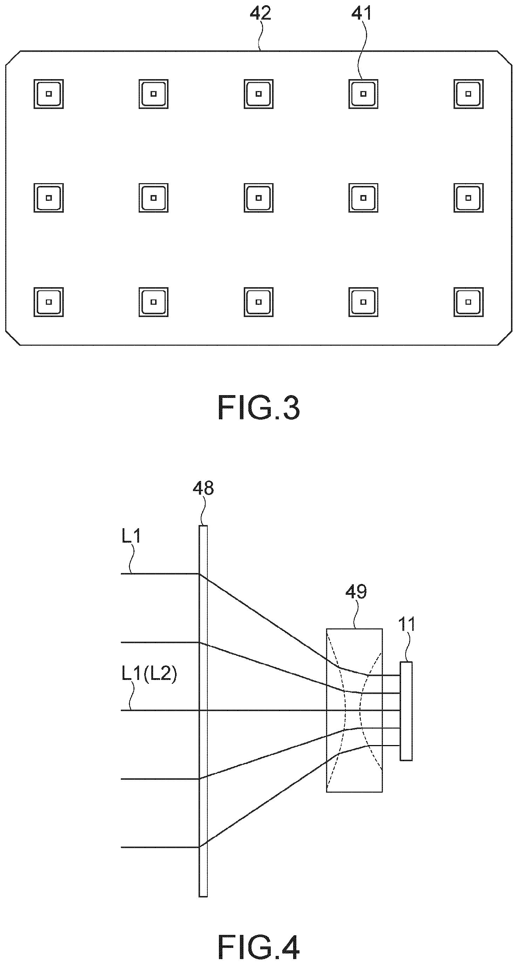

Fig. 3 is a schematic view showing a configuration example of a light source substrate 42.

In the present embodiment, a total of 15 LEDs 41 arranged 3 × 5 in two perpendicular directions are mounted on the light source substrate 42 in a matrix.

From the center of each of the LED 41, an axis extending in a direction perpendicular to the light source substrate 42 becomes the optical axis L2 of each of the LED 41. The LED 41 emits a divergent light E along the optical axis L2. Incidentally, the optical axis L2 of the LED 41 arranged in the center will be the optical axis L1 of the light source unit 40.

The LED 41 functions as a point light source. That is, the light source unit 40 according to the present embodiment includes fifteen point light sources arranged in a matrix.

Of course, in the application of the present technology, the numbers of the LEDs 41 and an arrangement configuration of the LEDs 41 are not limited and may be arbitrarily designed.

In the following description, when the direction of the optical axis L2 (L1) is set as a front-rear direction, the side where the LED 41 is arranged is set to "rear," and the side on which the divergent light E is emitted is as "front".

In the present embodiment, one or more LED 41 correspond to one or more light emitting portions.

As shown in Fig. 2, the plurality of light beam control members 43 is arranged on the optical axis L2 of each of the plurality of LED s41.

The plurality of light beam control members 43 has an equal configuration to each other, and the arrangement configuration with respect to the LED 41 (direction to be arranged, positional relationship toward LEDs 41, etc.) are also equal to each other.

As shown in Fig. 2, each light beam control member 43 has an incident surface 45, an inner side surface 46, and an emission surface 47.

On the incident surface 45, the divergent light E emitted from the LED 41 is incident.

The inner side surface 46 reflects the divergent light E incident on the incident surface 45 inside the light beam control member 43.

The emission surface 47 emits the divergent light E reflected by the inner side surface 46 in the direction of the optical axis L2.

The light beam control member 43 controls the state of the divergent light E emitted along the direction of the optical axis L2 from the LED 41, and it is possible to emit along the direction of the same optical axis L2. Hereinafter, the light emitted from the light beam control member 43 will be described as the emitted light E using the same reference sign.

In the present embodiment, the light beam control member 43 corresponds to an optical member.

As shown in Figs. 2 and 4, a magnification changing optical system 44 has a Fresnel lens 48, and a biconcave lens 49. The magnification changing optical system 44 is configured as an afocal optical system with reference to the optical axis L2 of the light source unit 40.

The magnification changing optical system 44 is an optical system for reducing or enlarging an irradiated surface (irradiation range) of the entire light beam emitted from the plurality of light beam control members 43 of the light source unit 40. In the present embodiment, the magnification changing optical system 44 reduces the irradiation range of the light beam emitted from the light source unit 40, and light is irradiated to the light modulator 11 smaller in size than the light source matrix formed of the plurality of LEDs 41. Thus, it is possible to realize a small-sized apparatus.

Of course, the magnification changing optical system 44 may be configured such that the irradiation range of the light beam emitted from the light source unit 40 is enlarged.

The Fresnel lens 48 has a positive focal length (positive refractive power) and is arranged on a front side of each emission surface 47 of the plurality of light beam control members 43. The Fresnel lens 48 condenses the emitted light E emitted from each emission surface 47 of the plurality of light beam control members 43, and the light E is incident on the biconcave lens 49.

The biconcave lens 49 emits the light incident to the optical axis L1 in the direction of each light source unit 40 (direction of optical axis L2 of each LED 41). That is, the emitted light E emitted in the direction of the optical axis L2 from each light beam control member 43 is reduced by the magnification changing optical system 44 and is emitted in the direction of the same optical axis L2.

The emitted light E emitted from the biconcave lens 49 is irradiated to the pixel region of the light modulator 11. Incidentally, as shown in Fig. 4, the optical axis of the light refracted by the Fresnel lens 48 and the optical axis of the light to be collimated again by the biconcave lens 49 may be described as the optical axis L1 of the LED 41.

When comparing the state of the emitted light E emitted from the emission surface 47 of each light beam control member 43 with the state of the emitted light E emitted from the biconcave lens 49 of the magnification changing optical system 44, a light flux is reduced. That is, a size of the light flux is reduced around the optical axis L1 as the center. On the other hand, emission characteristics such as a divergence angle with respect to the optical axis L1 are maintained.

For example, the irradiation range in the case of placing the irradiated surface at the position of the light modulator 11 shown in Figs. 2 and 4 is compared with the irradiation range in the case of placing the irradiated surface at the position of the Fresnel lens 48. Then, the irradiation range is reduced at a predetermined magnification, a shape of the irradiation range, a relative illuminance distribution in the light flux, etc. are substantially maintained.

By placing the magnification changing optical system 44, it is possible to reduce the size of the apparatus.

In this embodiment, the optical axis L1 of the light source unit 40 (optical axis L2 of center LED 41) is aligned with the center of the pixel region of the optical modulator 11. Therefore, the divergent light E emitted from the center LED 41 shown in Fig. 2 is irradiated to the area in the center of the pixel region of the light modulator 11.

Then, the positional relationship of the respective LED 41 in the light source substrate 42 is reflected in the position of the area where the light is irradiated in the pixel region of the light modulator 11. That is, the divergent light E from the right adjacent LED 41 of the center LED 41 is irradiated to a left adjacent region of the center region of the pixel region. The divergent light E from the LED 41 of an upper right corner becomes the region of an upper left corner of the pixel region. Of course, the present invention is not limited to such a design.

As described above, in the present embodiment, the controller 25 can control the plurality of LEDs 41 by the local dimming (partial driving) method.

By the control in the local dimming method, it is possible to irradiate light only to a necessary region of the pixel region, or to control the power of the light irradiated for each partial region with respect to the pixel region. This makes it possible to improve a contrast of the image projected by the projection system 20. Furthermore, since it is sufficient to drive the necessary LED 41 at the required power, it is possible to reduce a power consumption.

### [Emission Angle]

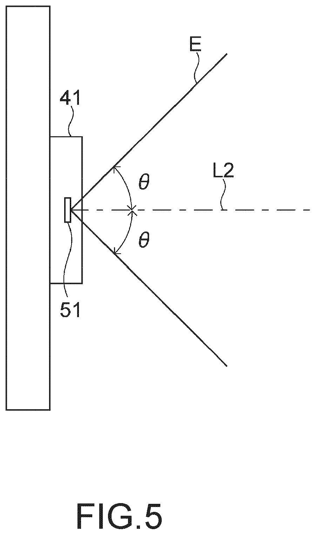

Fig. 5 is an enlarged view of the LED 41.

As shown in Fig. 5, the LED 41 has a die (chip) 51 that emits the divergent light E. An axis extending from the center of the die 51 corresponds to the optical axis L2 of the LED 41.

For the divergent light E emitted from each LED 41, the angle with respect to the optical axis L2 of the LED 41 is set to an emission angle θ.

The light emitted along the direction of the optical axis L2 is the light having the emission angle of 0 degrees. With reference to the optical axis L2, the emission angle θ is increased as the emission direction deviates from the direction of the optical axis L2.

The light emitted in a direction inclined 10 degrees with respect to the optical axis L2 becomes the light having the emission angle of 10 degrees. The light emitted in a direction inclined 30 degrees with respect to the optical axis becomes the light having the emission angle of 30 degrees.

In Fig. 5, the light having the emission angle θ is shown respectively on an upper side and a lower side. In the present disclosure, all the light intersecting angle with the optical axis L2 is the same angle (light emitted at same intersection angle over 360 degrees around optical axis L2 as center) is the light having the same emission angle θ.

Therefore, for example, the light having the emission angle of 10 degrees includes entire light emitted over a periphery of the optical axis L2 around the optical axis L2 as the center at an angle intersecting at 10 degrees with respect to the optical axis L2.

Furthermore, in the present disclosure, the divergent light E will be described as the plurality of lights having different emission angles θ with respect to the optical axis of the LED 41. For example, the present technology will be described using expressions of the light having the emission angle of 10 degrees included in the divergent light and the light having the emission angle of 30 degrees included in the divergent.

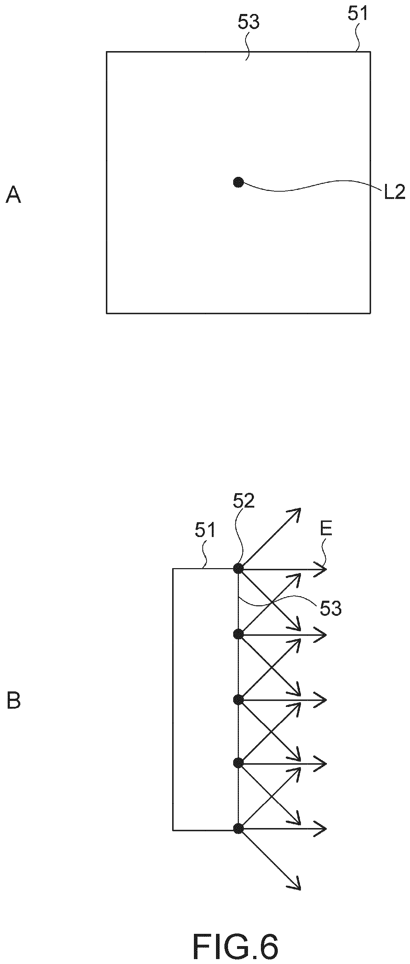

Fig. 6 is schematic views showing the die 51 of the LED 41. Fig. 6A is a front view when the die 51 is viewed from an emission side of the divergent light E along the optical axis L2. Fig. 6B is a side view of the die 51 as viewed from a lateral.

The divergent light E emitted from the LED 41 is emitted from not only the center of the die 51 (position of optical axis L2) but also the entire die 51. That is, the divergent light E is emitted from each point within the die 51 as emission points 52. Incidentally, as shown in Fig. 6B, the emission points 52 are not arranged at equal intervals, and the divergent light E is emitted from the entire emission surface 53 of the die 51 shown in Fig. 6A.

For the divergent light E emitted from each emission point 52 in the die 51, the angle with respect to the direction of the optical axis L2 is the emission angle θ.

For example, the light emitted along the direction of the optical axis L2 from each emission point 52 all becomes the light having the emission angle of 0 degrees. From each emission point 52, the light emitted in a direction inclined 10 degrees from the direction of the optical axis L2 all becomes the light having the emission angle of 10 degrees.

Of course, the light having the emission angle of 10 degrees emitted from one emission point 52 becomes the entire light emitted over the periphery of the axis around an axis extending from the emission point 52 to the direction of the optical axis L2 at an angle intersecting at 10 degrees with respect to the axis.

The size of the die 51 is, for example, 5 mm × 5 mm. Of course, the present technology is not limited to this, and can be applied to any size of the die 51. Also, the shape of the die 51 is not limited.

In the present embodiment, the emission surface 53 of the die 51 corresponds to an emission region for emitting the divergent light E.

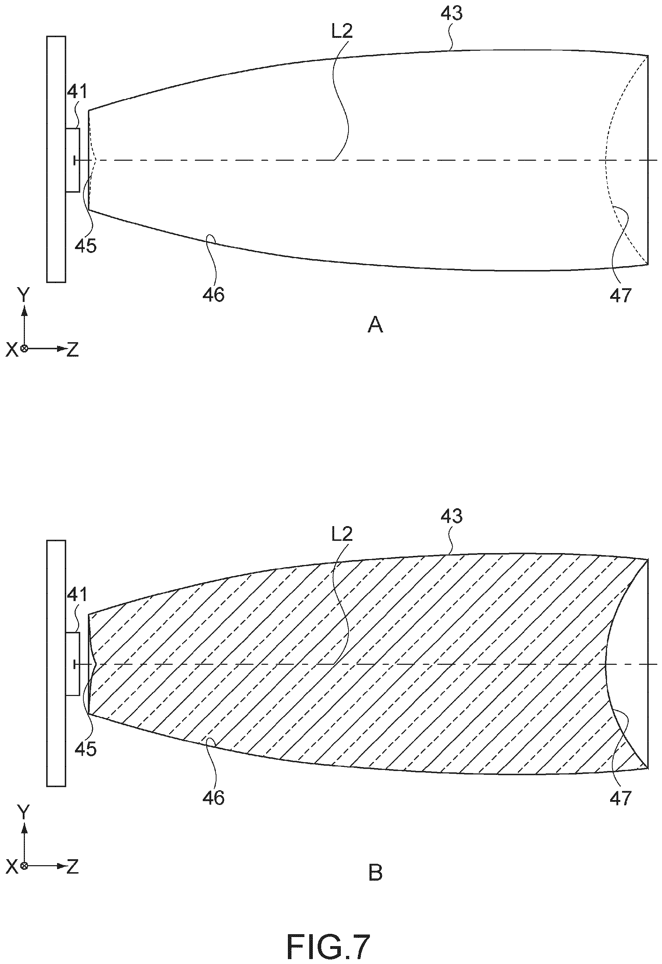

Fig. 7 is schematic views showing a configuration example of the light beam control member 43.

Fig. 7A is a side view of the light beam control member 43 as viewed from the lateral.

Fig. 7B is a cross-sectional view when the light beam control member 43 is cut along the optical axis L2 (hereinafter, referred to as optical axis cross-section) .

Here, an optical axis L2 direction of the LED 41 is set to the Z direction. Fig. 7A is a side view when the light beam control member 43 is viewed from the X direction. Furthermore, Fig. 7B is an optical axis cross-section when cutting the light beam control member 43 along the optical axis L2 from the Y direction perpendicular to each of the X direction and Z direction.

The light beam control member 43 has the incident surface 45, the inner side surface 46, and the emission surface 47 arranged on the optical axis L2 of the LED 41.

In the present embodiment, the light beam control member 43 has a shape of a rotating body having the optical axis L2 as the center axis. Therefore, along the optical axis L2, the optical axis cross-section obtained by cutting the light beam control member 43 from any direction around the optical axis L2 has a substantially equal cross-sectional shape to each other.

The light beam control member 43 has a bullet shape having the optical axis L2 as the center axis. The bullet shape typically has the center axis and is in the form of the rotating body. Then, the bullet shape is such that the cross-sectional area is reduced toward the tip in the direction of the center axis.

In the present embodiment, the incident surface 45 is formed on a tip side (side where cross-sectional area is reduced) of the bullet shape, and the incident surface 45 is directed toward the LED 41. Then, the inner side surface 46 is configured such that the cross-sectional area is increased toward the front side (traveling direction side of divergent light E), and the emission surface 47 is formed on an opposite end. Incidentally, the position before reaching the emission surface 47 becomes a peak of the cross-sectional area, and then the cross-sectional area is slightly reduced.

Of course, the light beam control member is not limited to the bullet shape.

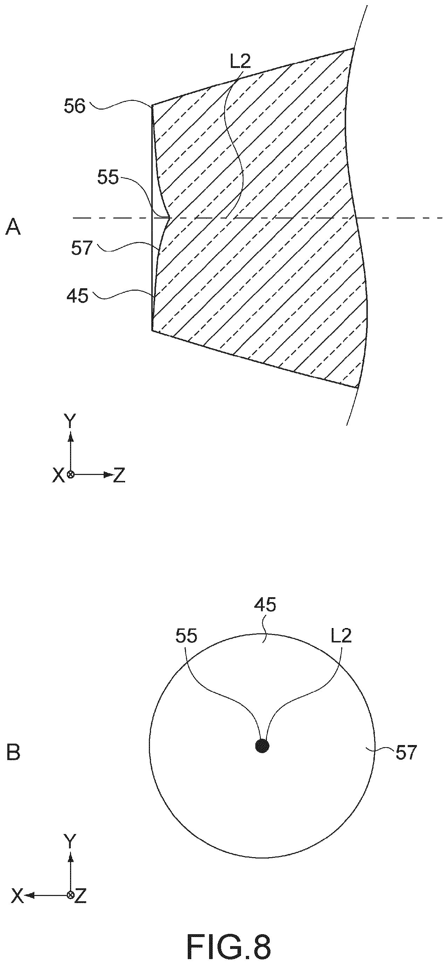

Fig. 8 is schematic views showing a configuration example of the incident surface 45.

Fig. 8A is an enlarged view of the incident surface 45 in the optical axis cross-section shown in Fig. 7B.

Fig. 8B is a front view of the incident surface 45 when viewed from the LED 41 along the direction of the optical axis L2.

As shown in Figs. 8A and B, the incident surface 45 has a cone recessed shape. That is, the incident surface 45 has a concave shape with the position on the optical axis L2 as an apex 55, when viewed from the LED 41 along the direction of the optical axis L2. Thus, the incident surface 45 has the concave shape with respect to the LED 41.

Furthermore, as shown in Fig. 8A, the incident surface 45 has a lens surface 57 protruding to an optical axis L2 side from the apex 55 on the optical axis L2 to an end 56 of an LED 41 side. That is, in the incident surface 45, the lens surface 57 protruding toward the optical axis L2 is configured over the periphery of the optical axis L2 when viewed from the LED 41 along the direction of the optical axis L2.

The lens surface 57 acts a positive refractive power to the light of various emission angles emitted from the LED 41 and emits toward the inner side surface 46. For example, depending on a position where each of the plurality of lights having different emission angles is incident, the shape of the lens surface 57 is appropriately designed. This makes it possible to apply different refractive powers to each of the plurality of lights.

Furthermore, since the lens surface 57 is configured over the periphery of the optical axis L2, by properly splitting the light of various emission angles emitted along the optical axis L2, it is possible to guide the inner side surface 46.

As shown in Fig. 8A, the incident surface 45 has a shape such that two curves protruding to the optical axis L2 side connecting the apex 55 to the end 56 at the LED 41 side are arranged symmetrically around the optical axis L2 as the center in the optical axis cross-section. When these two curves (or either one of curves) are rotated around the optical axis L2 as a rotation axis, the shape of the incident surface 45 is provided.

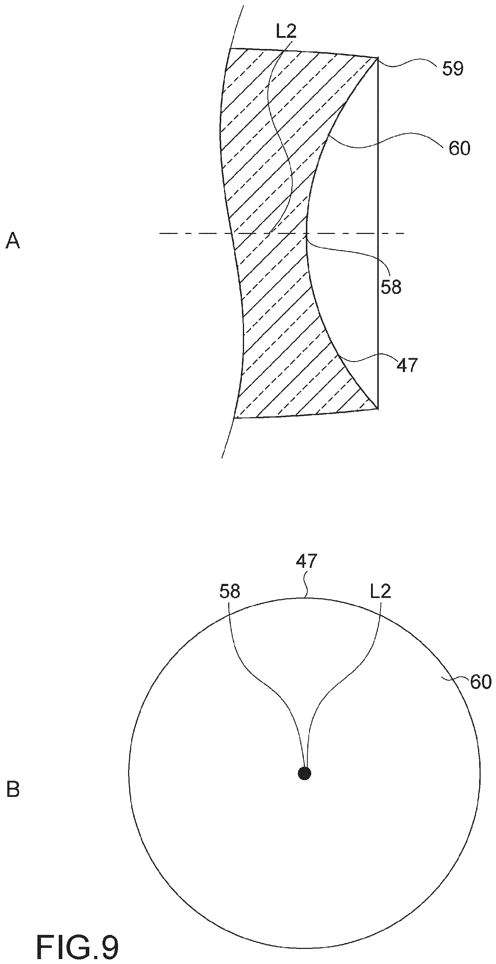

Fig. 9 is schematic views each showing a configuration example of the emission surface 47.

Fig. 9A is an enlarged view of the emission surface 47 in the optical axis cross-section shown in Fig. 7B.

Fig. 9B is a schematic view of the emission surface 47 when viewed from a side in which the divergent light E is emitted along the direction of the optical axis L2 (side opposite to LED 41).

As shown in Figs. 9A and B, the emission surface 47 has a concave shape. That is, the emission surface 47 has the concave shape with the position on the optical axis L as a center 58 when viewed from the side from which the divergent light E is emitted along the direction of the optical axis L2. Therefore, the emission surface 47 has the concave shape with respect to the side in which the divergent light E is emitted.

Therefore, in the present embodiment, the light beam control member 43 has the bullet shape as an overall outer shape, and both ends along the direction of the optical axis L2 each has the concave shape toward the inner side.

Furthermore, as shown in Fig. 9A, the emission surface 47 has a lens surface 60 which is concave with respect to the optical axis L2 from the center 58 on the optical axis L2 to an end 59 of the side in which the divergent light E is emitted. That is, as to the emission surface 47, the lens surface 60 which is concave with respect to the optical axis L2 is configured over the periphery of the optical axis L2 when viewed from the side in which the divergent light E is emitted along the direction of the optical axis L2.

The lens surface 60 acts a negative refractive power to the light of various emission angles reflected by the inner side surface 46 and emits in the direction of the optical axis L2. For example, depending on the position where each of the plurality of lights having different emission angles is incident, the shape of the lens surface 60 is appropriately designed. This makes it possible to apply different refractive powers to each of the plurality of lights.

Furthermore, since the lens surface 60 is configured over the periphery of the optical axis L2, it is possible to appropriately emit the light of various emission angles reflected by the inner side surface 46.

As shown in Fig. 9A, the emission surface 47 has a shape such that two curves being concave with respect to the optical axis L2 connecting the center 58 to the end 59 of the side in which the divergent light E is emitted are arranged symmetrically around the optical axis L2 as the center in the optical axis cross-section. When these two curves (or either one of curves) are rotated around the optical axis L2 as the rotation axis, the shape of the emission surface 47 is provided.

Returning to Fig. 7, the inner side surface 46 is configured to surround the optical axis L2 between the incident surface 45 and the emission surface 47.

The inner side surface 46 is configured such that the inclination angle with respect to the optical axis L2 is continuously changed from an incident surface 45 side toward an emission surface 47 side. Thus, in the optical axis cross-section shown in Fig. 7B, the inner side surface 46 configures two curves each having an inclination angle with respect to the optical axis L2 is continuously changed from the incident surface 45 side toward the emission surface 47 side. Conversely, when these two curves (or either one of curves) are rotated around the optical axis L2 as the rotation axis, the shape of the inner side surface 46 is provided. Incidentally, a continuous change includes a case where the same value is maintained in the course of the change.

As shown in Figs. 7A and B, in the present embodiment, the inner side surface 46 has a shape protruding outward with respect to the optical axis L2. Thus, when looking at the inner side surface 46 from the inner side of the light beam control member 43, i.e., when looking at the inner side surface 46 from the incident direction of the light incident on the inner side surface 46, the inner side surface 46 has a concave curved surface.

The inner side surface 46 reflects light of various emission angles derived from the incident surface 45 toward the emission surface 47. For example, depending on the position where each of the plurality of light of different emission angles is incident, the shape of the inner side surface 46 is appropriately designed. Thus, it is also possible to reflect each of the plurality of lights by changing the reflection angles or the like.

For example, it is also possible to configure such that, as to the inner side surface 46, a rate of change of the inclination angle with respect to the optical axis L2 is continuously small from the incident surface 45 to the emission surface 47 in an optical axis cross-section.

Furthermore, since the inner side surface 46 is configured over the periphery of the optical axis L2, it is possible to properly reflect the light of various emission angles derived from the incident surface 45.

In the present embodiment, the divergent light E incident on the incident surface 45 recessed in a cone shape is totally reflected by the inner side surface 46 and is then emitted in the direction of the optical axis L2 from the emission surface 47 recessed in a curved shape. By configuring the incident surface 45, the inner side surface 46, and the emission surface 47, the light beam is easily controlled and it is possible to properly control the state of the emitted light.

Incidentally, the incident surface 45, the inner side surface 46, and the emission surface 47 may be referred to as a cone-shaped recess, a reflecting side surface, and an emission recess.

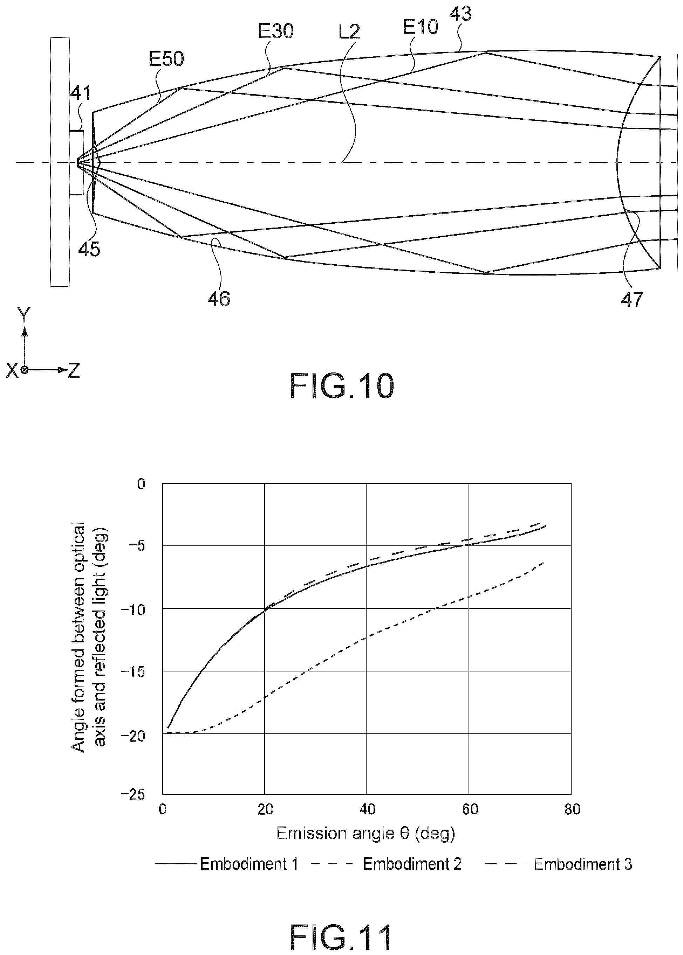

Fig. 10 is a view schematically showing an optical path of the light in the light beam control member 43. Fig. 10 is an optical axis cross-section, and hatching is omitted for ease of viewing the optical path.

In Fig. 10, a light E10 of the emission angle of 10 degrees, a light E30 of the emission angle of 30 degrees, and a light E50 of the emission angle of 50 degrees emitted from the emission points 52 of the center on the optical axis L2 are shown.

In the present embodiment, with respect to the light emitted from the emission point 52 of the center, the smaller the emission angle θ is, the nearer the light is incident on the position of the emission surface 47 side of the inner side surface 46. The greater the emission angle θ is, the nearer the light is incident on the position of the incident surface 45 side of the inner side surface 46.

The light incident on each position of the inner side surface 46 is reflected by the inner side surface 46 and is guided to the emission surface 47.

Fig. 11 is a graph showing a relationship between the emission angle θ and an angle formed between the optical axis L2 and the reflected light reflected by the inner side surface 46 with respect to the divergent light E emitted from the emission point 52 of the center.

In Fig. 11, not only the result in the first embodiment but also results in a second embodiment and a third embodiment which will be described later are shown collectively.

Furthermore, in Fig. 11, the angle between the reflected light and the optical axis L2 is represented by a sign of -. The smaller the angle between the reflected light and the optical axis L2 is, the smaller the absolute value is (value after sign of - is smaller). The greater the angle between the reflected light and the optical axis L2 is, the greater the absolute value is (value after sign of - is greater).

As shown in Fig. 11, the light reflected by the inner side surface 46 all travels in a direction approaching the optical axis L2 and reaches the emission surface 47. Also, the greater the emission angle θ is, the smaller the angle formed between the reflected light and the optical axis L2 is. That is, the greater the emission angle θ is, the nearer the reflected light reflected by the inner side surface 46 gently toward the direction parallel to the optical axis L2 is. In other words, there is no singularity in which the angle between the reflected light and the optical axis L2 changes suddenly and greatly.

Thus, by configuring the incident surface 45, the inner side surface 46, and the emission surface 47, it is possible to sufficiently suppress a generation of a light-dark difference (unevenness) when the emitted light E emitted from the light beam control member 43 (entire light having different emission angles) is irradiated to the irradiated surface.

For example, it is an effective configuration that there is no singularity that changes suddenly and greatly with respect to the rate of change of the inclination angle of the inner side surface 46 and the rate of change of the inclination angle of the emission surface 47.

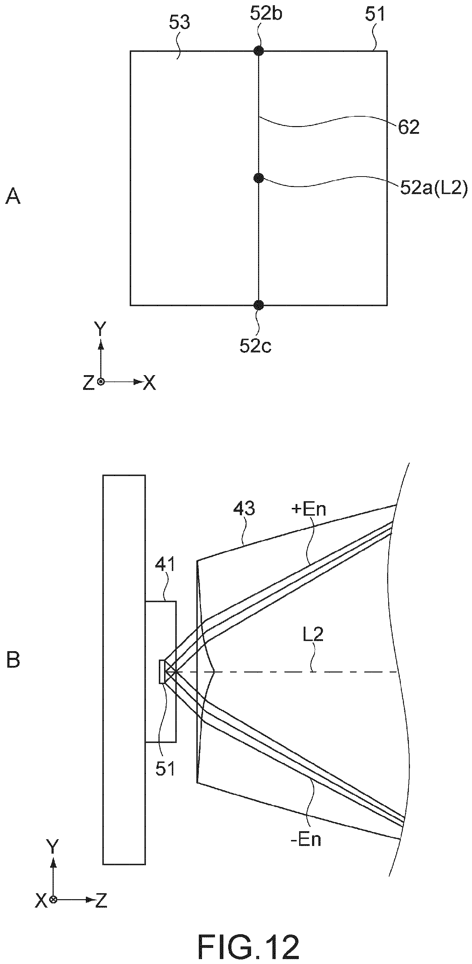

Fig. 12 is views each for explaining a light beam traveling on the optical axis cross-section.

As shown in Fig. 12A, an axis passing through an emission point 52a at the center of the die 51 (hereinafter referred to as a center emission point), is defined as an optical axis line 62. In Fig. 12A, the optical axis line 62 extending in the vertical direction (Y direction) is shown. Not only the optical axis line 62 extending in this direction, but also all lines passing through the center emission point 52a and extending in any direction of 360 degrees are regarded as the optical axis line 62.

As shown in Fig. 12A, an emission point located at one end of the optical axis line 62 is referred to as a first end emission point 52b. An emission point located at the other end is referred to as a second end emission point 52c.

Fig. 12B is an optical axis cross-section obtained by cutting the light beam control member 43 from the extending direction of the optical axis line 62 (Y direction).

As described above, the divergent light E is emitted from each emission point 52 inside the die 51. Therefore, the divergent light E is emitted from each emission point 52 on the optical axis line 62.

Fig. 12B shows lights En having the same emission angle θ (e.g., n degrees) emitted from the first end emission point 52b, the center emission point 52a, and the first end emission point 52c of the optical axis line 62.

Hereinafter, with respect to the light having the emission angle of n degrees emitted from the optical axis line 62 and traveling on the optical axis cross-section, the light traveling toward a first end emission point 52b side (light traveling upward in Fig. 12) is defined as a light +En having an emission angle of +n degrees. Furthermore, the light traveling toward a second end emission point 52c side (light traveling downward in Fig. 12) is defined as light -En having the emission angle of -n degrees.

For example, for the light having the emission angle of 10 degrees emitted from the optical axis line 62 and traveling on the optical axis cross-section, a light +E10 having an emission angle of +10 degrees and a light -En having an emission angle of -10 degrees are defined distinctively.

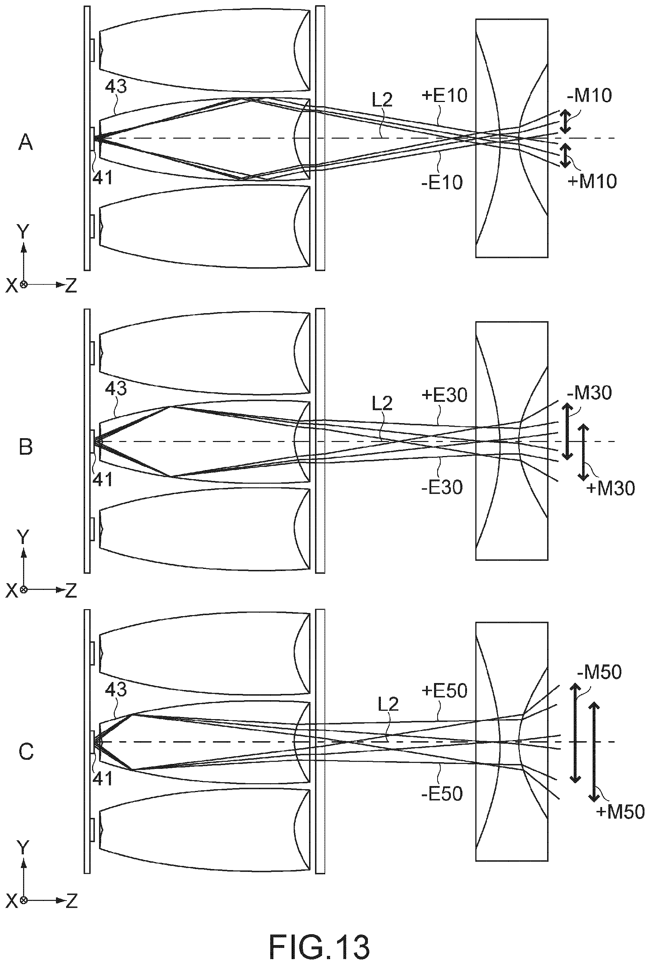

Fig. 13 is schematic views each showing an example of the optical path of the light emitted from the optical axis line 62 and traveling on the optical axis cross-section. In Fig. 13, the light emitted from the center LED 41 mounted on the light source substrate 42 shown in Fig. 3 is shown as a representative.

Fig. 13A is a schematic view showing the optical paths of the light +E10 having the emission angle of +10 degrees and the light -E10 having the emission angle of -10 degrees emitted from the optical axis line 62 and traveling on the optical axis cross-section.

Fig. 13B is a schematic view showing the optical paths of a light +E30 having an emission angle of +30 degrees and a light -E30 having an emission angle of - 30 degrees emitted from the optical axis line 62 and traveling on the optical axis cross-section.

Fig. 13C is a schematic view showing the optical paths of a light +E50 having the emission angle of +50 degrees and a light -E50 having the emission angle of - 50 degrees emitted from the optical axis line 62 and traveling on the optical axis cross-section.

In each of Figs. 13A-C, arrows shown on emission sides of the biconcave lenses 49 are the optical axis ranges M.

The optical axis range of the light +E10 having the emission angle of +10 degrees is defined as the optical axis range +M10, and the optical axis range of the light -E10 having the emission angle of -10 degrees is defined as the optical axis range -M10.

The optical axis range of the light +E30 having the emission angle of +30 degrees is defined as the optical axis range +M30, and the optical axis range of the light -E30 having the emission angle of -30 degrees is defined as the optical axis range -M30.

The optical axis range of the light +E50 having the emission angle of +50 degrees is defined as the optical axis range +M50, and the optical axis range of the light -E50 having the emission angle of -50 degrees is defined as the optical axis range -M50.

### [Irradiation Range of Divergent Light]

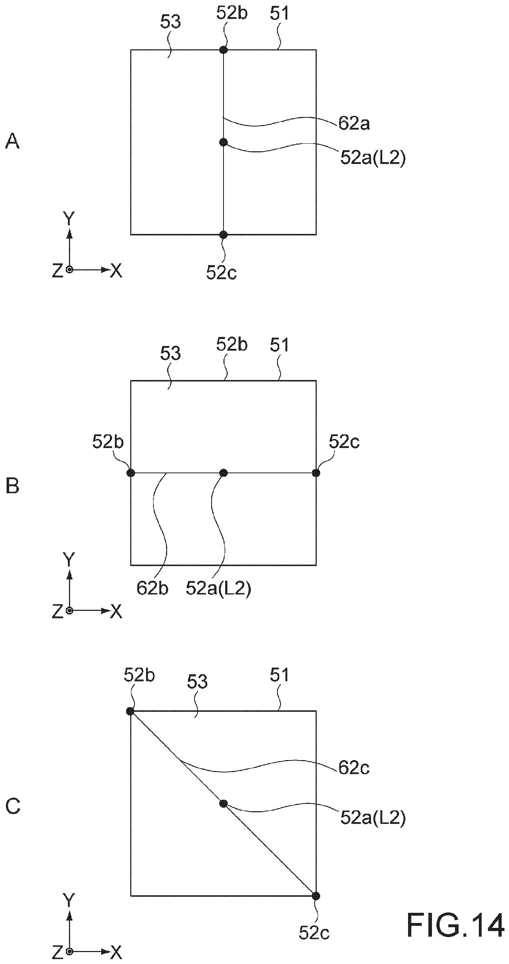

Referring to Figs. 14 to 18, the irradiation range of the divergent light E emitted from the respective emission points 52 of the LED 41 will be described.

With reference to an optical axis line 62a extending in the Y direction shown in Fig. 14A, the light +En having the emission angle of +n degrees and the light -En having the emission angle of -n degrees are defined.

The light +En having the emission angle of +n degrees with reference to the optical axis line 62a extending in the Y direction is the light emitted in the direction of the optical axis L2 inclined by n degrees to a first end emission point 52b side along the extending direction of the optical axis line 62.

The light -En having the emission angle of -n degrees with reference to the optical axis line 62a extending in the Y direction is the light emitted in the direction of the optical axis L2 inclined by n degrees to a second end emission point 52c side along the extending direction of the optical axis line 62.

Similarly, with reference to an optical axis line 62b extending in the X direction shown in Fig. 14B, the light +En having the emission angle of +n degrees and the light -En having the emission angle of -n degrees are defined.

Furthermore, as shown in Fig. 14C, with reference to an optical axis line 62c extending in a diagonal direction of the die 51, the light +En having the emission angle of +n degrees and the light -En having the emission angle of -n degrees are defined.

Thus, a simulation is performed for the irradiation range when the light traveling in the two directions defined for one optical axis line 62 is emitted from each emission point 52 in the die 51.

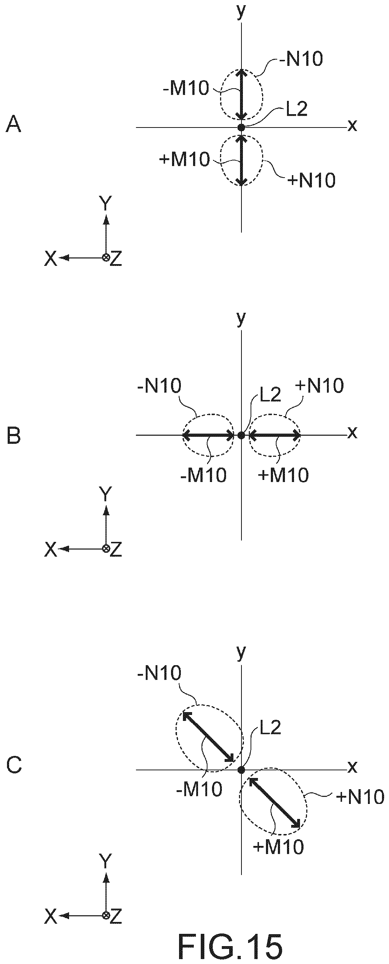

Figs. 15 to 18 are schematic views for explaining simulation results of the irradiation range on the irradiated surface when the light traveling in the two directions defined with respect to the optical axis line 62 is emitted from each emission point 52 of the die 51.

In the present embodiment, the pixel region of the light modulator 11 shown in Fig. 2 and the like is the irradiated surface. The XYZ coordinates in Fig. 15 correspond to the XYZ coordinates shown in Fig. 14. That is, the directions corresponding to the respective directions of XYZ defined with respect to the die 51 and the directions of the arrows are represented by the same arrows of XYZ.

By the XYZ coordinates shown in Figs. 14 and 15, it can be said that the direction and the orientation of the die 51 viewed from the front correspond to the direction and the orientation of the irradiated surface (pixel region) viewed from the front. It should be appreciated that the application of the present technology is not limited to such a positional relationship.

An intersection of the x-axis and y-axis shown in Fig. 15 corresponds to the position of the optical axis L2 on the irradiated surface (denoted by same reference numeral L2). That is, the intersection of the x-axis and y-axis is the position reaching the pixel region (irradiated surface) when the optical axis L2 of each LED 41 shown in Fig. 2 or the like is extended.

Fig. 15 is schematic views each showing the irradiation range when the light +E10 having the emission angle of +10 degrees and the light -E10 having the emission angle of -10 degrees are emitted with reference to each of the optical axis lines 62a to 62c.

Fig. 15A shows an irradiation range +N10 of the light +E10 having the emission angle of +10 degrees with reference to the optical axis line 62a and an irradiation range -N10 of the light -E10 having the emission angle of -10 degrees with reference to the optical axis line 62a shown in Fig. 14A.

As shown in Fig. 15A, the irradiation range +N10 is a range based on the optical axis range +M10 shown in Fig. 13A. The irradiation range -N10 is a range based on the optical axis range -M10 shown in Fig. 13A.

Incidentally, the optical axis range M is the irradiation range of the light En having the emission angle of n degrees defined with respect to the optical axis line 62 from each emission point 52 on the optical axis line 62. The optical axis range M is configured to extend in a direction corresponding to the extending direction of the optical axis line 62. An irradiation point of the light emitted from the first end emission point 52b and an irradiation point of the light emitted from the second end emission point 52c become both ends of the optical axis range M.

The optical axis range M is configured with reference to the position of the optical axis L2 (intersection of x-axis and y-axis).

Incidentally, the portions other than the optical axis ranges +M10 and -M10 of the irradiation ranges +N10 and -N10 are the irradiation ranges of the light +E10 having the emission angle of +10 degrees and the light -E10 having the emission angle of -10 degrees emitted from the emission point 52 at a position different from the optical axis line 62a of the die 51.

Fig. 15B shows an irradiation range +N10 of the light +E10 having the emission angle of +10 degrees with reference to the optical axis line 62b, and an irradiation range -N10 of the light -E10 having the emission angle of -10 degrees with reference to the optical axis line 62b shown in Fig. 14B.

Even when the optical axis line 62b extending in the X direction is used as a reference, the irradiation range +N10 is configured with the optical axis range +M10 as a reference. An irradiation range -N10 is configured with reference to the optical axis range -M10.

In the present embodiment, the light beam control member 43 is configured as the rotating body with the optical axis L2 as the center axis. Therefore, the optical axis ranges +M10 and -M10 with respect to the optical axis line 62a shown in Fig. 14A and the optical axis ranges +M10 and -M10 with respect to the optical axis line 62b shown in Fig. 14B have a substantially equal configuration except that the extending directions of the optical axis ranges are different.

Fig. 15C shows an irradiation range +N10 of the light +E10 having the emission angle of +10 degrees with reference to the optical axis line 62c, and an irradiation range -N10 of the light -E10 having the emission angle of -10 degrees with reference to the optical axis line 62c shown in Fig. 14C.

Even when the optical axis line 62c extending in the diagonal direction of the die 51 is used as a reference, the irradiation range +N10 is configured with the optical axis range +M10 as a reference. The irradiation range -N10 is configured with reference to the optical axis range -M10.

Incidentally, the extending directions of the optical axis ranges +M10 and -M10 are directions corresponding to the extending direction of the optical axis line 62c.

The optical axis line 62c extending in the diagonal direction is longer than the optical axis lines 62a and 62b. Therefore, since the region where the light is emitted becomes longer, the optical axis ranges +M10 and -M10 with respect to the optical axis line 62c also become longer. The irradiation ranges +N10 and -N10 with reference to the optical axis ranges +M10 and -M10 also increase in size.

Other configurations are substantially the same as the irradiation ranges +N10 and -N10 when the optical axes 62a and 62b are used as the references.

The irradiation ranges +N10 and -N10 with reference to the optical axis line 62 extending in a direction different from the optical axis lines 62a to 62c shown in Figs. 14A to C are also configured with reference to the optical axis ranges +M10 and -M10.

That is, the irradiation ranges +N10 and -N10 are configured in accordance with the extending direction and the length of the optical axis line 62.

In Fig. 15, outer shapes of the irradiation ranges +N10 and -N10 are shown by dotted lines, but are only schematic views, and take various shapes.

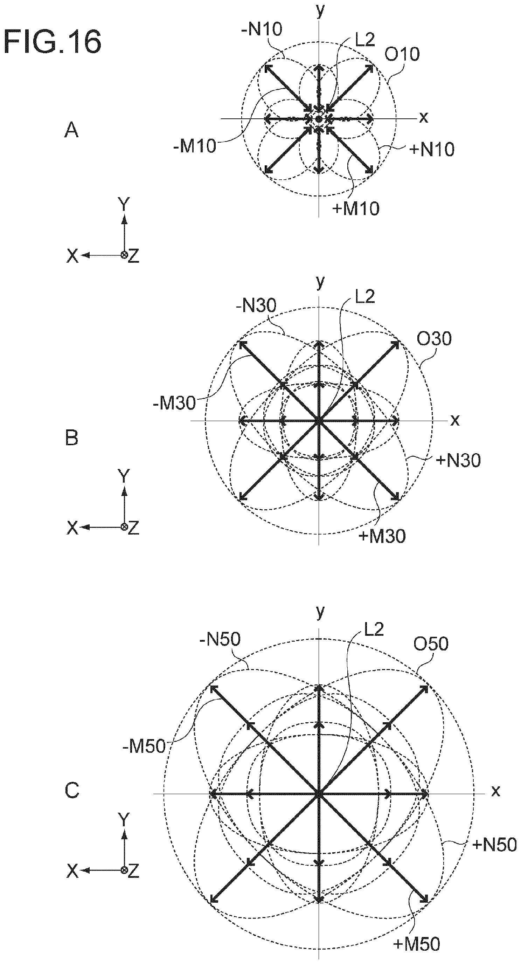

Fig. 16 is schematic views for explaining an irradiation range O when the light having the emission angle of n degrees is emitted from each emission point 52 of the die 51.

Fig. 16A schematically shows an irradiation range O10 when the light E10 having the emission angle of 10 degrees is emitted from the respective emission points 52 of the die 51.

For example, the optical axis line 62 shown in Fig. 14 is rotated around the position of the optical axis L2 as the center from 0 degrees to 180 degrees. By synthesizing the irradiation ranges +N10 and -N10 corresponding to the optical axis line 62 of each angle, it is possible to simulate the irradiation range O10.

For example, as shown in Fig. 16A, with reference to the irradiation ranges +N10 and -N10 corresponding to the optical axis line 62c extending in the diagonal direction, it is possible to simulate the irradiation range O10.That is, with reference to the optical axis ranges +M10 and -M10 corresponding to the optical axis line 62c extending in the diagonal direction, it is possible to simulate the irradiation range O10.

In the present embodiment, the irradiation range O10 is configured with the position of the optical axis L2 as the center.

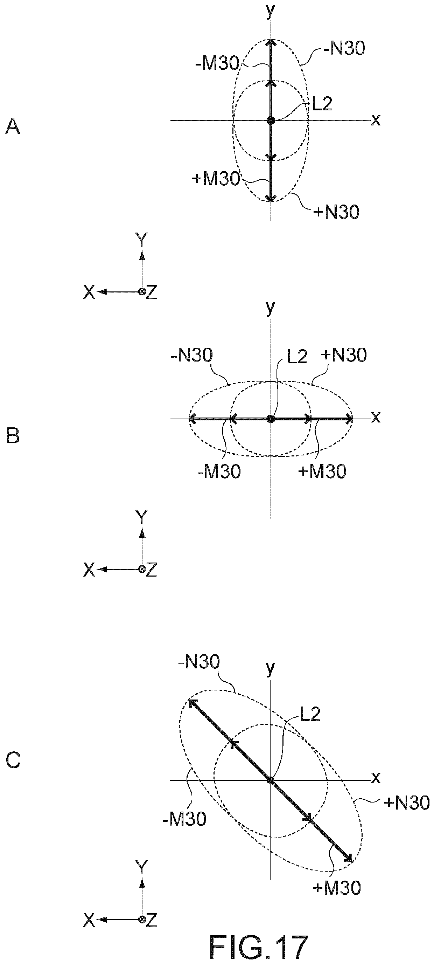

Fig. 17 is schematic views each showing the irradiation range when the light +E30 having the emission angle of +30 degrees and the light -E30 having the emission angle of -30 degrees are emitted with reference to each of the optical axis lines 62a to 62c.

Figs. 17A C to C show the irradiation range +N30 of the light +E30 having the emission angle of +30 degrees and the irradiation range -N30 of the light - E30 having the emission angle of -30 degrees with reference to each of the optical axis lines 62a to 62c shown in Figs. 14A to C.

As in the case where the light +E10 having the emission angle of +10 degrees and the light -10E having the emission angle of -10 degrees are irradiated, the irradiation ranges +N30 and -N30 are configured with reference to the optical axis ranges +M30 and -M30 shown in Fig. 13B.

The irradiation ranges +N30 and -N30 with reference to the optical axis line 62 extending in a direction different from the optical axis lines 62a to 62c shown in Figs. 14A to C are also configured with reference to the optical axis ranges +M30 and -M30. That is, depending on the extending direction and the length of the optical axis line 62, the irradiation ranges +N30 and -N30 are configured.

Fig. 16B schematically shows the irradiation range O30 when the light E30 having the emission angle of 30 degrees is emitted from the respective emission points 52 of the die 51.

For example, as shown in Fig. 16B, with reference to the irradiation ranges +N30 and -N30 corresponding to the optical axis line 62c extending in the diagonal direction, it is possible to simulate the irradiation range O30. That is, it is possible to simulate the irradiation range O30 with reference to the optical axis ranges +M30 and -M30 corresponding to the optical axis line 62c extending in the diagonal direction.

The irradiation range O30 is configured around the position of the optical axis L2 as the center.

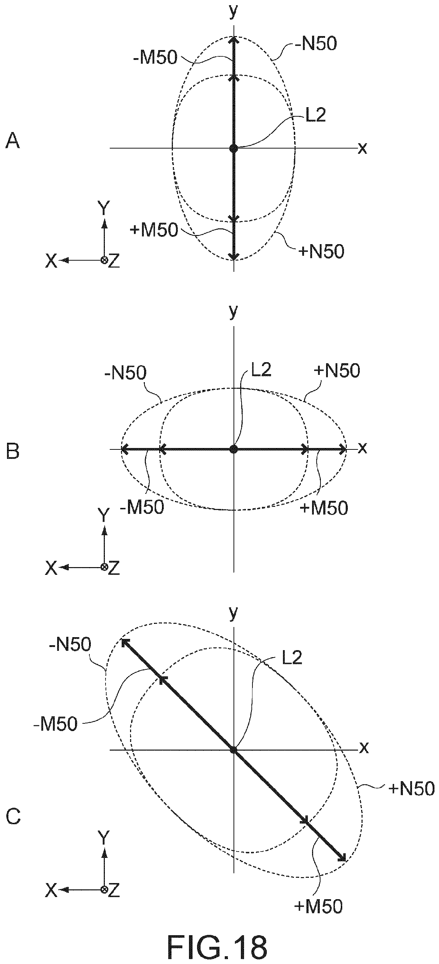

Fig. 18 is schematic views each showing an irradiation range when the light +E50 having the emission angle of +50 degrees and the light -E50 having an emission angle of -50 degrees are emitted with reference to each of the optical axis lines 62a to 62c.

Figs. 18A C to C show the irradiation range +N50 of the light +E50 having the emission angle of +50 degrees and the irradiation range -N50 of the light - E50 having the emission angle of -50 degrees with reference to each of the optical axis lines 62a to 62c shown in Figs. 14A to C.

As in the case where the light +E10 having the emission angle of +10 degrees and the light -10E having the emission angle of -10 degrees are irradiated, the irradiation ranges +N50 and -N50 are configured with reference to the optical axis ranges +M50 and -M50 shown in Fig. 13C.

The irradiation ranges +N50 and -N50 with reference to the optical axis line 62 extending in a direction different from the optical axis lines 62a to 62c shown in Figs. 14A to C are also configured with reference to the optical axis ranges +M50 and -M50. That is, depending on the extending direction and the length of the optical axis line 62, the irradiation ranges +N50 and -N50 are configured.

Fig. 16C schematically shows the irradiation range O50 when the light E50 having the emission angle of 50 degrees is emitted from the respective emission points 52 of the die 51.

For example, as shown in Fig. 16C, with reference to the irradiation ranges +N50 and -N50 corresponding to the optical axis line 62c extending in the diagonal direction, it is possible to simulate the irradiation range O50. That is, it is possible to simulate the irradiation range O50 with reference to the optical axis ranges +M50 and -M50 corresponding to the optical axis line 62c extending in the diagonal direction.

The irradiation range O50 is configured around the position of the optical axis L2 as the center.

Thus, as to the light having the emission angle of n degrees included in the divergent light E, the irradiation range is defined by the position and the length of the optical axis range M corresponding to the optical axis line 62 when the light having the emission angle of n degrees is emitted from each emission point 52 in the die 51.

For example, by appropriately designing each configuration of the incident surface 45, the inner side surface 46, and the emission surface 47 of the light beam control member 43, for each of the plurality of lights having different emission angles θ included in the divergent light E, it is possible to set the position and the size of the optical axis range M. Thus, the size of each irradiation range of the plurality of lights having the different emission angles θ included in the divergent light E can have a predetermined distribution.

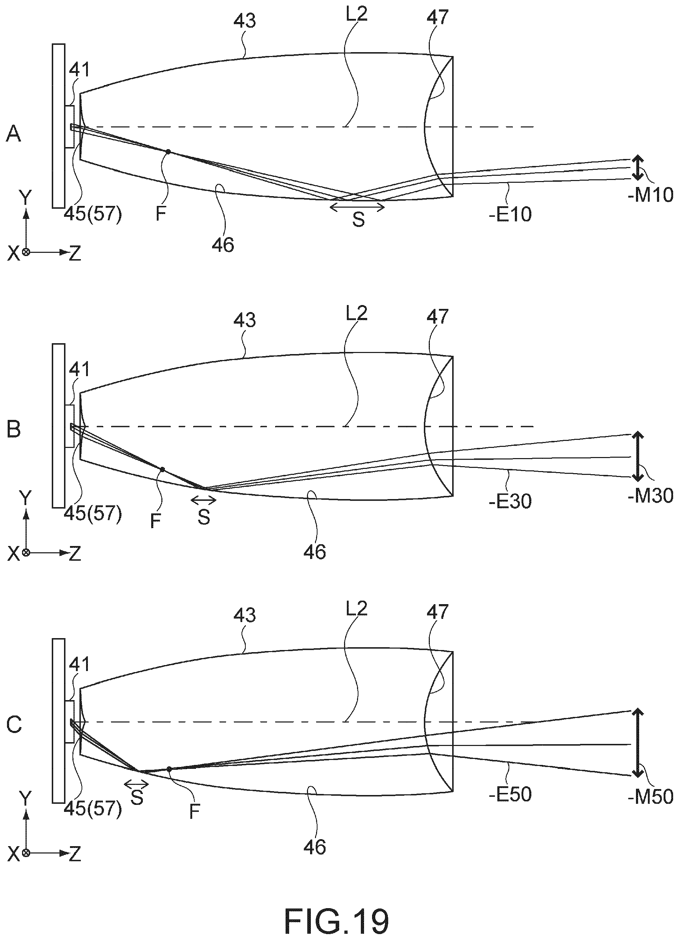

Fig. 19 is schematic views each for explaining a configuration example for changing the optical axis range M in accordance with the emission angle θ.

Fig. 19A shows the light -E10 having the emission angle of -10 degrees and the optical axis range -M10.

Fig. 19B shows the light -E30 having the emission angle of -30 degrees and the optical axis range -M30.

Fig. 19C shows the light -E50 having the emission angle of -50 degrees and the optical axis range -M50.

Furthermore, in Fig. 19, in a state where the magnification changing optical system 44 is not arranged, the optical axis range M is shown. Even in this case, the relationship between the size of the optical axis range M and each emission angle θ is equal. Therefore, even when the magnification changing optical system 44 is arranged from the state shown in Fig. 19, it is similarly possible to change the optical axis range M in accordance with the emission angle θ.

For example, for each of the plurality of lights having the different emission angles θ, the divergence angle is controlled when emitted from the emission surface 47 to the direction of the optical axis L2. This allows the optical axis range M to be controlled.

For example, for each of the plurality of lights having the different emission angles θ, a convergence force by the incident surface 45, a convergence force of the inner side surface 46, a divergence force by the emission surface 47 are controlled. Specifically, a focal length (refractive power) of the lens surface 57 of the incident surface 45, a reflection position in the inner side surface 46, the size of the reflection region in the inner side surface 46, a focal length (refractive power) of the emission surface 47 and the like are appropriately designed. As a result, it is possible to control the divergence angle at the time of emission from the emission surface 47.

Here, the degree of the divergence angle is expressed by large, medium, and small. In addition, the degree of the convergence angle is also expressed by large, medium, and small. When the convergence force is applied to a light beam having a large divergence angle, the divergence angle is reduced, and the light beam is converted to a light beam having a medium divergence angle, a small divergence angle, a parallel light, a small convergence angle, a medium convergence angle, and a large convergence angle.

When the divergence force is applied to a light beam having a large convergence angle, the divergence angle is increased, and the light beam is converted to a light beam having a large convergence angle, a small convergence angle, a parallel light, a small divergence angle, and a large divergence angle.

In the example shown in Fig. 19, by controlling mainly the positional relationship between the focal point of the lens surface 57 of the incident surface 45 and the inner side surface 46, the optical axis range M is changed in accordance with the emission angle θ.

As shown in Fig. 19A, for the light beams having a small emission angle θ, the optical path to the reflection region S of the inner side surface 46 is long. In the optical path to the reflection region S of the inner side surface 46, the lens surface 57 of the incident surface 45 is designed such that the focal point F is formed at a position close to the incident surface 45. That is, it is designed such that the focal length S of an incident region where the light beams having the small emission angle θ of the lens surface 57 are incident (region close to optical axis L2) is shorter (refractive power is greater).

The light beams condensed at the focal point F travel to the inner side surface 46 while diverging. This divergence angle is referred to as the medium divergence angle.

The light beams having the medium divergence angle traveling to the inner side surface 46 have the long optical path to the inner side surface 46 and are therefore incident on the inner side surface 46 with a spread. That is, the area of the reflection region S for reflecting the light beams on the inner side surface 46 is increased.

The inner side surface 46 is a side surface of the bullet shape having a convex shape protruding to the outer side. Thus, by the reflection on the inner side surface 46, the light beams are converged.

Since the area of the reflection region S of the light beams is large, the difference in the reflection angles between both ends of the reflection region S are great in the direction of the optical axis L2. Therefore, the convergence force acting on the light reflected in the reflection region S is great. As a result, the light beams reflected on the inner side surface 46 are converted from divergent to convergence and proceed toward the emission surface 47.

This convergence angle is set to a small convergence angle. That is, in the present embodiment, when a large convergence force is applied from the inner side surface 46, the light beams having the small emission angle θ are converted from the light beams having the medium divergence angle to the light beams having the small convergence angle.

Since the emission surface 47 has the concave lens shape, the light beams are diverged and emitted.

When the divergent force is applied from the emission surface 47, the light beams having the small convergence angle are emitted in the direction of the optical axis L2 as the light beams having the small divergence angle.

As shown in Fig. 19B, for the light beams having a medium emission angle θ, the distance is shortened to the reflection region S of the inner side surface 46. The lens surface 57 of the incident surface 45 is designed such that the focal point F is formed on the optical path to the reflection region S of the inner side surface 46.

The light beams converged on the focal point F travel as the light beams having the medium divergence angle to the inner side surface 46. Since the distance from the focal point F to the inner side surface 46 is short, the area of the reflection region S is small. Therefore, the convergence force acting on the light beams having the medium divergence angle is small. As a result, the light beams having the medium emission angle θ are converted from light beams having the medium divergence angle to the light beams having the small divergence angle and are incident on the emission surface 47.

When the divergence force acts on the light beams having the small divergence angle from the emission surface 47, the light beams having the medium divergence angle are emitted in the direction of the optical axis L2.

As shown in Fig. 19C, for the light beams having the large emission angle θ, the distance is further shortened to the reflection region S of the inner side surface 46. The lens surface 57 of the incident surface 45 is designed such that the focal point F is formed not on the optical path to the reflection region S of the inner side surface 46 but on the optical path of the light beams reflected on the reflection region S.

The light beams are reflected on the reflection region S with a small area before converging on the focal point F, and a small convergence force is acted thereon. Therefore, the light beams in the convergence angle traveling toward the inner side surface 46 are converted into the light beams of a large convergence angle by being reflected to the inner side surface 46 and are converged on the focal point F. Thereafter, the light beams become the light beams having the large divergence angle and are incident on the emission surface 47.

As shown in Fig. 19C, the distance from the focal point F to the emission surface 47 is long. Thus, the light beams having the large divergence angle are incident on the emission surface 47 with a sufficient spread. That is, the area of the incident region where the light beams on the emission surface 47 are incident is increased. Therefore, the divergent force acting on the light beam by the emission surface 47 is large. As a result, the light beams having the large emission angle θ are emitted in the direction of the optical axis L2 as the light beams having the large divergence angle.

For example, by designing the incident surface 45, the inner side surface 46, and the emission surface 47, for each of the plurality of lights having different emission angles θ, it is possible to control the size of the optical axis range M. Thus, by controlling the size of each irradiation range O of the plurality of lights having the different emission angles θ included in the divergent light E, it is possible to provide a predetermined distribution.

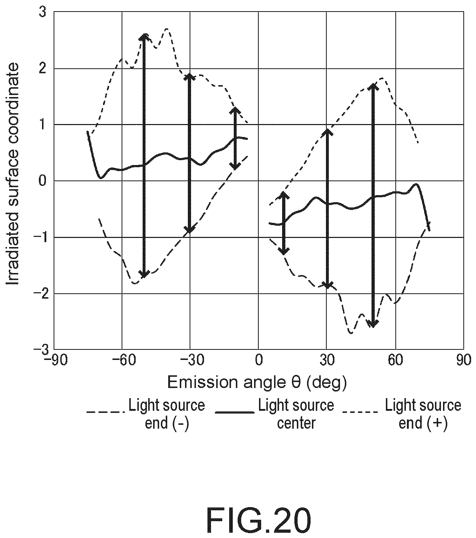

Fig. 20 is a graph showing a relationship between the emission angle and the optical axis range.

The origin of the graph (0, 0) corresponds to the position of the optical axis L2 on the irradiated surface.

The horizontal axis of the graph is the emission angle θ. The graph on the right side from 0 degrees is the optical axis range +M when the light +En having the emission angle of +n degrees is emitted. The graph on the left side from 0 degrees is the optical axis range -M when the light -En having the emission angle of -n degrees is emitted. The optical axis ranges +M and -M have a point symmetry relationship with respect to the origin.

In Fig. 20, the optical axis ranges +M10, +M30, and +M50 are shown in the right region, and the optical axis ranges -M10, -M30, and -M50 are shown in the left region.

An irradiated surface coordinate in the vertical axis of the graph is a coordinate system with reference to the origin and is set by being the distance between the position of the optical axis L2 of the adjacent LED 41 as 1.

For example, among the plurality of LEDs 41 shown in Fig. 3, the three LEDs 41 arranged vertically in the center are focused. The result of the LED 41 in the middle among the three LEDs 41 is plotted as shown in Fig. 20.

In this case, the result of the LED 41 adjacent upward of the middle LED 41 is shown in the graph that shifts upward one scale of the graph shown in Fig. 20. The result of the LED 41 adjacent downward of the middle LED 41 is shown in the graph that shifts downward one scale of the graph shown in Fig. 20.

Therefore, the irradiation range of the divergent light E emitted from the middle LED 41 is centered on the origin shown in Fig. 20. The irradiation range of the divergent light E emitted from the LED 41 adjacent upward is centered on the coordinate (0, 1) shown in Fig. 20. The irradiation range of the divergent light E emitted from the LED 41 adjacent downward is centered on the coordinates (0, -1) shown in Fig. 20.

In the present embodiment, a pitch of the plurality of LEDs 41 shown in Fig. 3 is 11 mm. Then, a pitch of the position of the optical axis L2 on the irradiated surface (length of one scale of graph) is 2.8 mm.

Furthermore, a light source end (+) and a light source end (-) shown in Fig. 20 correspond to the first end emission point 52b and the second end emission point 52c shown in Fig. 12 or the like.

A light source center is the irradiation point of the light emitted from the center emission point 52a shown in Fig. 12 or the like. As shown in Fig. 20, not necessarily the light emitted from the center emission point 52a is irradiated to the center of the optical axis range M.

As shown in Fig. 20, in the present embodiment, the light beam control member 43 is configured such that the length of the optical axis range M changes greatly in accordance with the emission angle θ.

As shown in Fig. 16 or the like, the length of the optical axis range M defines the irradiation range of the light having the corresponding emission angle θ.

In the example shown in Fig. 20, as the emission angle θ is increased, the optical axis range M of each light beam is increased at the origin as the center. Exceeding 50 degrees, the optical axis range M of each light beam is decreased at the origin as the center.

When the irradiation ranges of the respective light beams are synthesized, the position of the optical axis L1 becomes the maximum illuminance on the irradiated surface, and the illuminance continuously decreases as it moves away from the position of the optical axis L1.

Incidentally, the light having the emission angle θ of up to substantially 15 degrees has the irradiation range of a doughnut shape in which no light is irradiated near the origin. On the other hand, the light having the emission angle θ over substantially 15 degrees has the irradiation range including the origin. Therefore, the position of the optical axis L2 becomes the maximum illuminance on the irradiated surface.

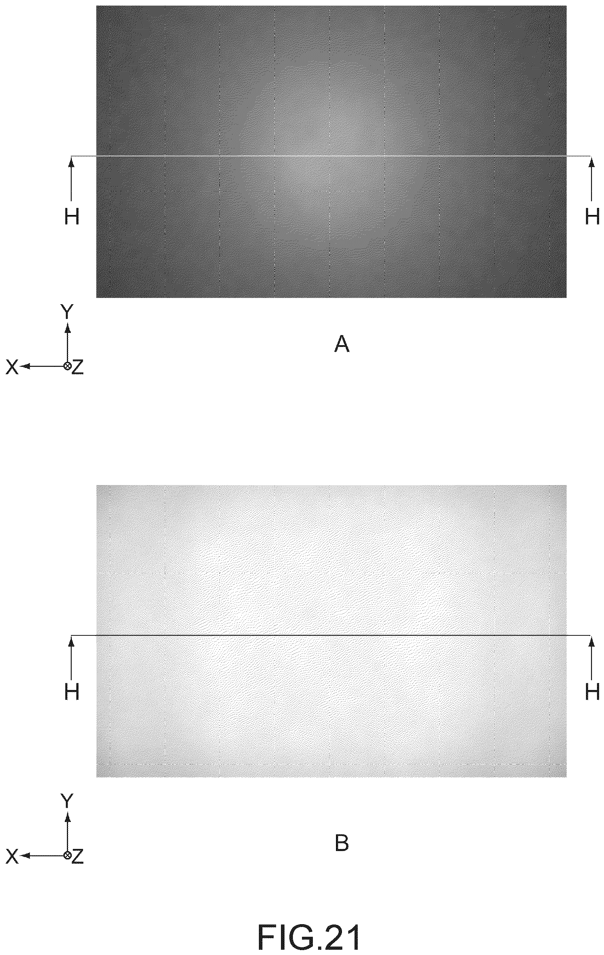

Fig. 21 is schematic views each showing the illuminance distribution of the divergent light E irradiated on the irradiated surface.

Fig. 21A is a view showing the illuminance distribution when one LED 41 is turned on.

Fig. 21B is a view showing the illuminance distribution when 15 LEDs 41 shown in Fig. 3 are turned on.

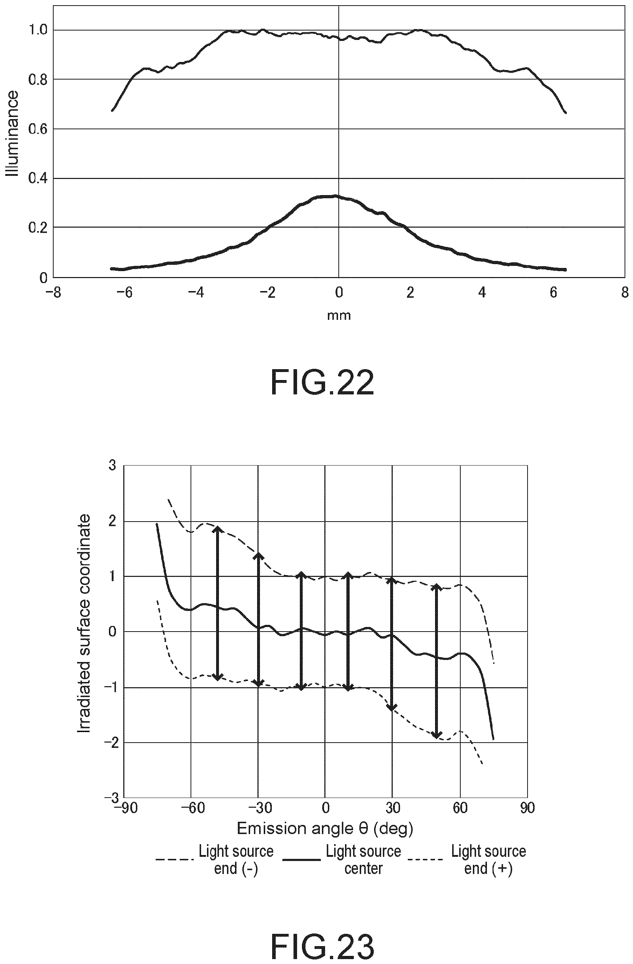

Fig. 22 is a graph showing the illuminance distributions in the H-H lines shown in Fig. 21A and B.

The graph below shows the illuminance distribution when one LED 41 is lit.

The above graph in the figure shows the illuminance distribution when 15 LED 41 are illuminated.

As shown in Fig. 21A and Fig. 22, when one LED 41 is turned on, the illuminance distribution is such that the illuminance is decreased by spreading substantially circular around the optical axis L2. In addition, the decrease in the illuminance is gradually decreased without a sharp decrease.

Furthermore, as shown in Fig. 22, when one LED 41 is turned on, a range from the position of the optical axis L2 (position of 0 mm) to about ±2.5 mm is a bright visible region. That is, the region where the illuminance is relatively high is spread up to the vicinity of the position of the optical axis L2 of the adjacent LED 41.

Thus, as shown in Fig. 21B and Fig. 22, when all LEDs 41 are turned on, it is possible to irradiate uniform light having sufficiently suppressed illuminance unevenness on the irradiated surface. As a result, it is possible to prevent brightness unevenness from generating in an image projected on a screen or the like and to realize a high-quality image display.

Furthermore, even when the control of the local dimming method is executed, the brightness unevenness is not generated in the image and it is possible to irradiate an illumination light with the power necessary for the required region of the pixel region. As a result, it is possible to realize an improvement in contrast of the image and a reduction in power consumption.

### [Comparative Example]

As a comparative example, it considers that a collimator lens having a convex lens shape is arranged on each of the plurality of LEDs 41 shown in Fig. 3.

Fig. 23 is a graph showing a relationship between the emission angle and the optical axis range.

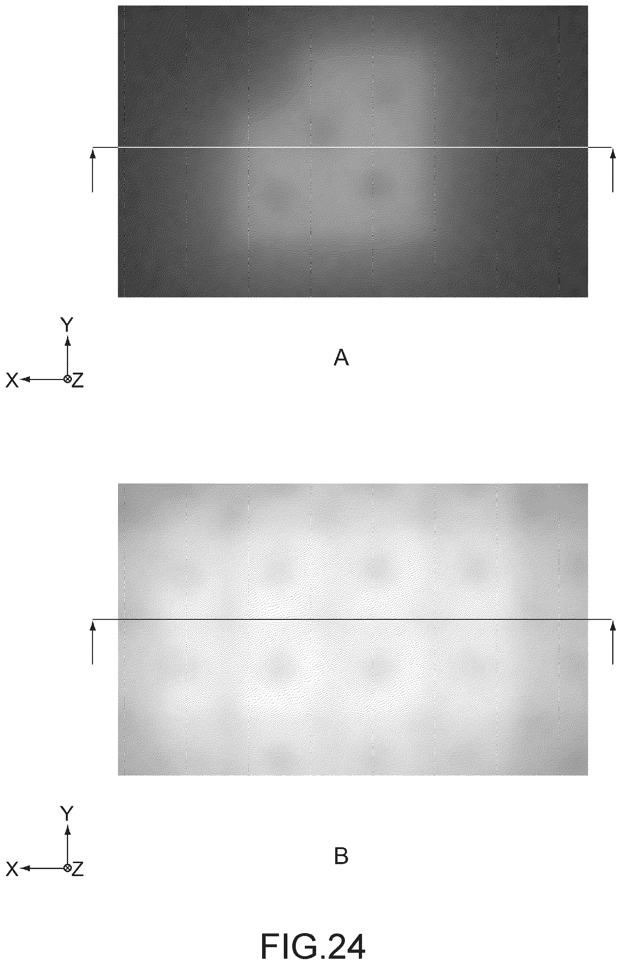

Fig. 24 is schematic views each showing the illuminance distribution of the divergent light E irradiated on the irradiated surface.

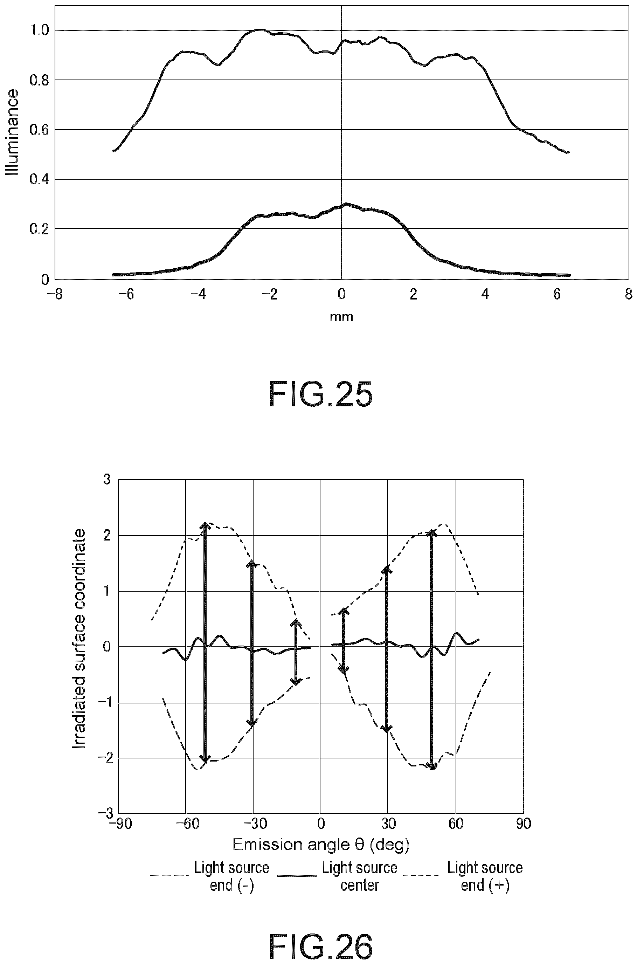

Fig. 25 is a graph showing the illuminance distributions in the H-H lines shown in Fig. 24A and B.

As shown in Fig. 23, when the collimator lens is arranged, for each of the plurality of lights having different emission angles θ, each optical axis range M is substantially the same range with reference to the position of the optical axis L2 (origin). In this case, the light is collected in a specific region and the illuminance becomes high on the irradiated surface. Therefore, as shown in Fig. 25, the illuminance changes steeply at a position corresponding to the edge of the die 51.

Consequently, as shown in Fig. 24A, the image of the die 51 is visibly imaged on the irradiated surface. Then, as shown in Fig. 24B and Fig. 25, when all LEDs 41 are turned on, the illuminance unevenness is generated on the irradiated surface. As a result, the brightness unevenness is generated for the image projected on a screen or the like.

It is also difficult to control the local dimming method.

For example, along the direction of the optical axis L2, the position of the light modulator 11 is moved back and forth. Then, by shifting and blurring the focal point of the light beams, the steep illuminance change is suppressed. In such a way, the irradiation range of the divergent light E from one LED 41 will be too broad, and it is difficult to apply to the control of the local dimming method which lights only any LEDs 41.

In the light source unit 40 according to the present embodiment, the light beam control member 43 is arranged on the optical axis L2 of the LED 41. By appropriately designing the incident surface 45, the inner side surface 46, and the emission surface 47 of the light beam control member 43, it is possible to easily control the light source and to appropriately control the state of the emitted light. For example, as shown in Fig. 21, it is possible to easily realize the illuminance distribution (hereinafter, referred to as loose change distribution) in which the illuminance gradually decreases from the center to the periphery. As a result, it is advantageous for the control of the local dimming method using a plurality of point light sources.

Here, in order to realize the loose change distribution, newly devised ideas will be listed. The following ideas are advantageous for realizing the loose change distribution but are not necessarily essential for realizing the loose change distribution. That is, if some or all of the following ideas are not satisfied, the loose change distribution is not realized.

The light beam control member 43 is configured such that each of the plurality of lights having the different emission angles θ emitted from the emission surface 47 is irradiated to the irradiation range corresponding to the emission angle θ with reference to the position of the optical axis L2.

The size of the irradiation range corresponding to the emission angle θ of each of the plurality of lights is configured to be a predetermined distribution. That is, in order to realize the loose change distribution, the size of the irradiation range corresponding to the emission angle θ of each of the plurality of lights is defined.

The light beam control member 43 is designed such that the irradiation range corresponding to the emission angle θ of each of the plurality of lights is configured with the position of the optical axis L2 as the center.

The light beam control member 43 is designed such that a difference between a maximum value and a minimum value of the size of the irradiation range corresponding to the emission angle θ of each of the plurality of lights is sufficiently large and the size of the irradiation range is continuously distributed between the maximum value and the minimum value.

For example, a threshold value may be set for the difference between the maximum value and the minimum value of the size of the irradiation range. For example, the threshold value can be set based on the size of one scale of the irradiated surface coordinate shown in Fig. 20 (pitch of position of optical axis L2 on irradiated surface). It should be appreciated that it is not limited thereto and may be arbitrarily set so as to realize a desired loose change distribution.

As a parameter for defining the size of the irradiation range, it is also possible to use a maximum distance from the position of the optical axis L2 of the irradiation range corresponding to the emission angle θ of each of the plurality of lights. The light beam control member 43 may be designed such that the difference between the maximum value and the minimum value of the maximum distance of each irradiation range is greater than a predetermined threshold value and the maximum distance is continuously distributed between the maximum value and the minimum value.

It is also effective to configure the light beam control member 43 such that each irradiation range corresponding to the emission angle θ of each of the plurality of lights is different from each other.

Any other configuration of the light beam control member 43 may be employed such that the illuminance of the divergent light E emitted from the emission surface 47 and irradiated on the irradiated surface arranged on the optical axis L2 becomes maximum at the position of the optical axis L2 on the irradiated surface and is continuously decreased as away from the position of the optical axis L2.

The light beam control member 43 is configured such that a decreasing ratio (decreasing rate) of the illuminance of the divergent light E irradiated on the irradiated surface as away from the position of the optical axis L2 falls within a predetermined range. That is, it is also effective to configure the light beam control member 43 so as not to induce a steep decrease in the illuminance.

The predetermined range, e.g., a range in which the change in the illuminance is not visually recognizable, may be set by, for example, calibration or the like each time. The predetermined range may be set by calibration or the like in accordance with the state of the illuminance unevenness of the projected image or the like. In addition, the predetermined range may be set by any method.

For example, the configuration in which the optical path shown in Figs. 10 and 11 is realized is effective in suppressing the illuminance unevenness in the illumination light on the irradiated surface.

In order to realize the loose change distribution, the size of a light source image (image of point light source) irradiated to the irradiated surface by the light beam control member 43 is also considered. The light source image irradiated to the irradiated surface by the light beam control member 43 is constituted by each light source image of the plurality of lights having the different emission angles θ included in the divergent light E. The light beam control member 43 is designed such that the size of each light source image of the plurality of lights having different emission angles θ is changed 1.5 times or more. This is advantageous for realizing the loose change distribution.

For example, it is assumed that the size of the light source image formed by the light having the emission angle of θm is minimum. In addition, it is assumed that the size of the light source image formed by the light having the emission angle of θM is maximum. In this case, the light beam control member 43 is designed such that the size of the largest light source image is at least 1.5 times or more of the size of the smallest light source image. Also, the light beam control member 43 is designed such that the size of each light source image of the plurality of lights is continuously varied within the range from the size of the minimum light source image to the size of the maximum light source image.

It is possible to define the size of the image of the point light source, for example, by a light image within an angle range where emission intensity of the point light source becomes a half value from the maximum value. For example, in the case of perfectly diffused light, a half-value angle is 60 degrees. It is possible to define an image in which the light in the angle range is imaged as an image of a point light source.

Therefore, according to this idea, the light beam control member 43 is designed such that the size of each light source image of the plurality of lights having different emission angles θ is changed 1.5 times or more in the angle range where the emission intensity of the point light source becomes the half value from the maximum value. Thus, it is also possible to describe such a way.

As a matter of course, other methods may be employed as a method for defining the size of the image of the point light source.

Note that the size of each light source image of the plurality of lights having different emission angles θ included in the divergent light E is a parameter related to the size of the irradiation range of each of the plurality of lights having different emission angles θ included in the divergent light E.

Thus, as an advantageous idea in realizing the loose change distribution, the light beam control member 43 is designed such that the size of each illumination range of the plurality of lights having different emission angles θ is changed 1.5 times or more. Such idea is also listed.

For example, the light beam control member 43 is designed such that the maximum value is at least 1.5 times the minimum value for the difference between the maximum value and the minimum value of the size of the irradiation range. Also, the light beam control member 43 is designed such that the size of the irradiation range of each of the plurality of lights changes continuously within a range from the minimum value to the maximum value. Of course, the light beam control member 43 may be designed such that this idea is established in the angle range where the emission intensity of the point light source becomes the half value from the maximum value.

In order to realize the loose change distribution, the position of the irradiation point of the light emitted from the center emission point 52a (light source center shown in Fig. 20) of each of the plurality of lights having different emission angles θ is also considered.

For example, with reference to Fig. 26, for each of a region of the emission angle of +n degrees on the right side and a region of the emission angle of -n degrees on the left side, the positions of the light source centers are plotted.

The positions of the light source centers are symmetrical (same position) in the region of the emission angle of +n degrees and the region of the emission angle of -n degrees the left side.

When the light source centers are concentrated at closer positions for each of the plurality of lights having the different emission angles θ, the illuminance of the positions where the light source centers are concentrated are relatively high in the irradiation range of the entire divergent light E emitted from the LEDs 41.

For example, as shown in Fig. 26, for each of the plurality of lights having different emission angles θ, it is assumed that the light source center is concentrated in the vicinity of the position of the optical axis L2. In this case, in the irradiation range of the entire divergent light E, there is a possibility that the illuminance of the position of the optical axis L2 (i.e., center position) becomes too high to generate the illuminance unevenness.

Therefore, the light beam control member 43 is configured such that the position of the light source center of each of the plurality of lights having different emission angles θ (irradiation point of light emitted from center emission point 52a) changes the distance by a size of 0.5 times or more the pitch of the position of the optical axis L2. Thus, it is possible to prevent a cause of the unevenness due to too high illuminance at a predetermined position of the irradiation range.

For example, in the angle range where the emission intensity of the point light source becomes the half value from the maximum value, the light beam control member 43 is configured such that the position of the light source center changes the distance by a size of 0.5 times or more of the pitch of the position of the light axis L2. Thus, it is possible to realize the loose change distribution with sufficiently reduced unevenness.

Incidentally, it is also possible to improve the illuminance of the portion by collecting the light source center of each light.

It should be noted that the application of the present technology is not limited only to the realization of the loose change distribution. By appropriately designing the incident surface 45, the inner side surface 46, and the emission surface 47 of the light beam control member 43, the size of the irradiation range corresponding to each emission angle θ of the plurality of lights can have other desired distribution.

In addition, the light source unit having one LED 41 and one light beam control member 43 can also be configured as an embodiment of the light source apparatus according to the present technology.

As described above, in the light source unit 40 according to the present embodiment, the light beam control member 43 having the incident surface 45, the inner side surface 46, and the emission surface 47 is arranged on the optical axis L2 of the LED 41 that emits the divergent light E. The light beam control member 43 is configured such that each of the plurality of lights included in the divergent light E is irradiated in the irradiation range corresponding to the emission angle θ. In addition, the light beam control member 43 is configured such that the size of each irradiation range of the plurality of lights has a predetermined distribution.

Thus, it is possible to control the state of the emitted light E emitted from the emission surface 47.

### <Second Embodiment>

An image display apparatus and a light source unit of a second embodiment according to the present technology will be described. In the following description, the same portions as the configuration and operation in the image display apparatus 500 and the light source unit 40 described in the above embodiment, the description thereof will be omitted or simplified.

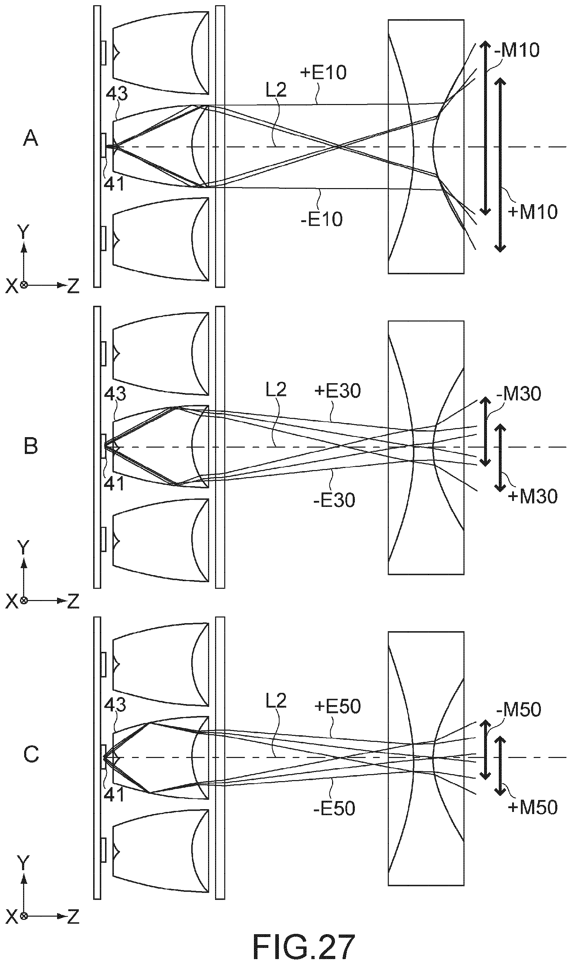

Fig. 27 is schematic views each showing an example of the optical path of light emitted from the optical axis line 62 and traveling on the optical axis cross-section when the light beam control member 43 according to this embodiment is used. Fig. 27 shows the lights emitted from the center LED 41 mounted on the light source substrate 42 shown in Fig. 3 as representatives.

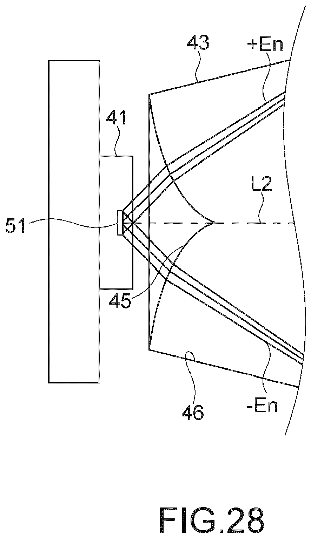

Fig. 28 is an enlarged view of the incident surface 45 in the optical axis cross-section.

In the light beam control member 43 according to the present embodiment, as shown in Fig. 28, the incident surface 45 configured as a cone-shaped recess is designed to further increase the inclination. Thus, it is possible to greatly refract the light beam having a small emit angle θ.

As a result, as shown in Fig. 27, the size of the light beam control member 43 in the direction of the optical axis L2 (total length of light beam control member 43) could be decreased. This is very advantageous for reducing the size of the apparatus.

As shown in Fig. 27, in the present embodiment, the optical axis range +M10 (-M10) of the light +E10 (-E10) having the emission angle of 10 degrees is longer than the optical axis range +M50 (-M50) of the light +E50 (-E50) having the emission angle of 50 degrees.

The optical axis range +M30 (-M30) of the light +E30 (-E30) having the emission angle of 30 degrees is shorter than the optical axis range +M10 (-M10) of the light +E10 (-E10) having the emission angle of 10 degrees and is longer than the optical axis range +E50 (-E50) of the light +M50 (-M50) having the emission angle of 50 degrees.

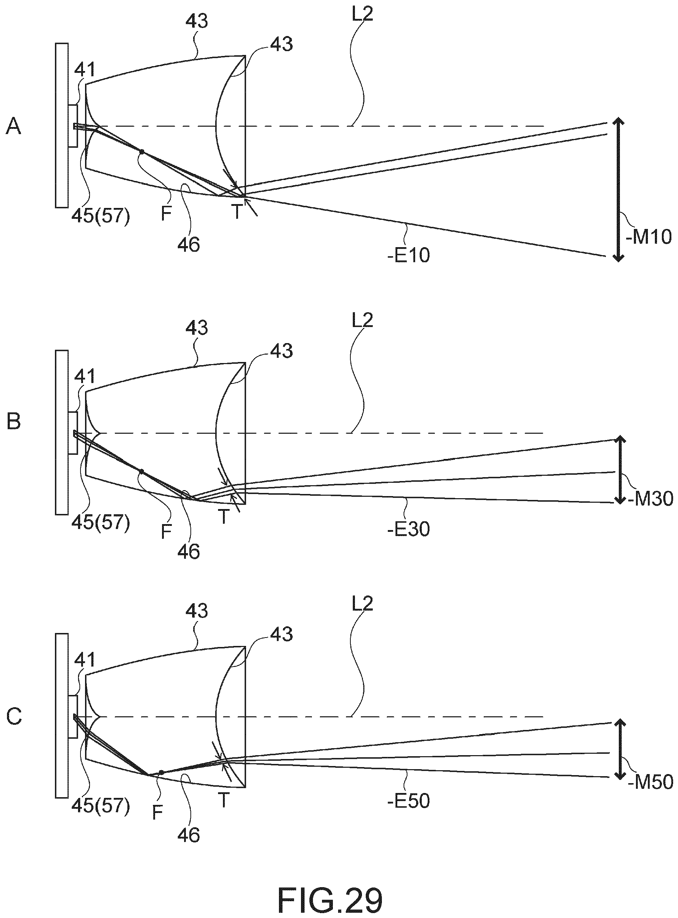

Fig. 29 is schematic views each for explaining a configuration example for changing the optical axis range M in accordance with the emission angle θ.

In the present embodiment, by controlling mainly the refractive power of the incident surface 45 and the refractive power of the emission surface 47, the optical axis range M is changed depending on the emission angle θ.

Specifically, as shown in Fig. 29A, the light beam having the small emission angle θ is incident on the inner side surface 46 as the light beam having the large divergence angle by increasing the refractive power at the incident surface 45 (lens surface 57) and after condensed on the focal point F.

Thus, the light beam reflected by the inner side surface 46 has a large area of the incident region T incident on the emission surface 47. Therefore, the divergent force acting on the light beam by the emission surface 47 becomes large. As a result, the light beam having the small emission angle θ is emitted in the direction of the optical axis L2 as the light beam having the large divergence angle.

As shown in Fig. 29B, the light beam having the medium emission angle θ is incident on the inner side surface 46 as the light beam having the medium divergence angle after condensed on the focal point F. The light beam reflected by the inner side surface 46 has a small area of the incident region T incident on the emission surface 47 and the divergence force acting on the light beam by the emission surface 47 is also suppressed. As a result, the light beam having the medium emission angle θ is emitted in the direction of the optical axis L2 as the light beam having the medium divergence angle.

As shown in Fig. 29C, the light beam having the large emission angle θ is incident on the inner side surface 46 as the light beam having the small converging angle by reducing the refractive power at the incident surface 45 (lens surface 57). The light beam reflected by the inner side surface 46 is incident on the emission surface 47 as the light beam having the small divergence angle after condensed on the focal point F.

The incident region T at the emission surface 47 becomes small and the divergence force acting on the light beam by the emission surface 47 is suppressed. As a result, the light beam having the large emission angle θ is emitted in the direction of the optical axis L2 as the light beam having the small divergence angle.

For example, by designing the incident surface 45, the inner side surface 46, and the emission surface 47, for each of the plurality of lights having different emission angles θ, it is possible to control the size of the optical axis range M. Thus, by controlling the size of each irradiation range O of the plurality of lights having the different emission angles θ included in the divergent light E, it is possible to provide a predetermined distribution.

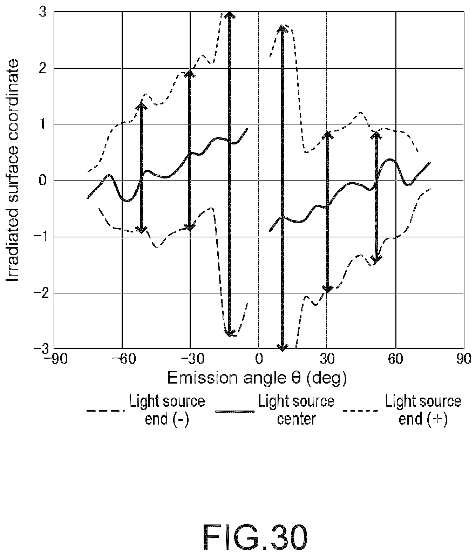

Fig. 30 is a graph showing a relationship between the emission angle and the optical axis range.

As shown in Fig. 20, the light beam control member 43 is configured such that the length of the optical axis range M changes greatly in accordance with the emission angle θ.

In the example shown in Fig. 30, as the emission angle θ is decreased, the irradiation range O of each light beam is increased at the origin as the center.

When the irradiation ranges O of the respective light beams are synthesized, the position of the optical axis L1 becomes the maximum illuminance on the irradiated surface, and the illuminance continuously decreases as it moves away from the position of the optical axis L1.

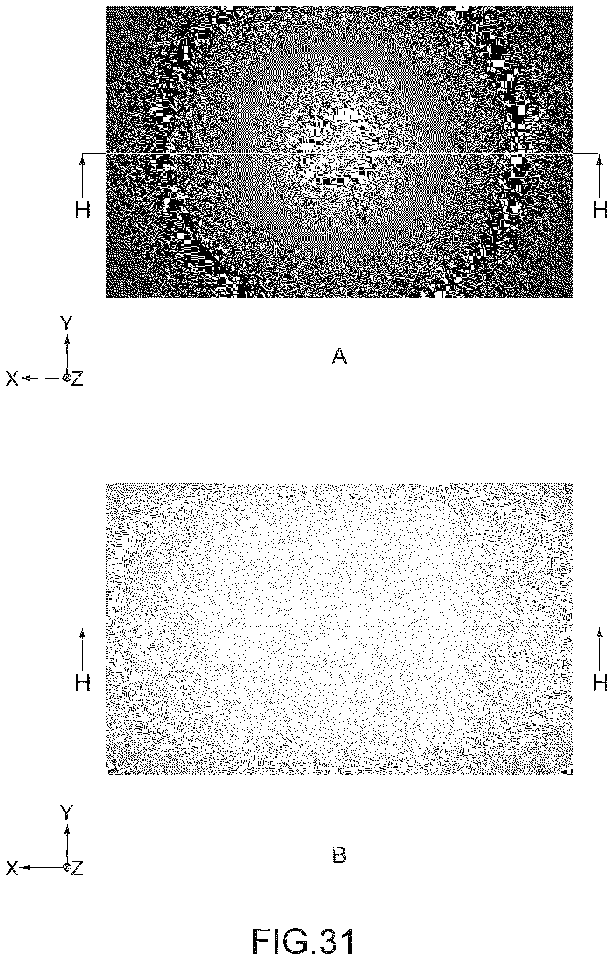

Fig. 31 is schematic views each showing an illuminance distribution of the divergent light E irradiated on the irradiated surface.

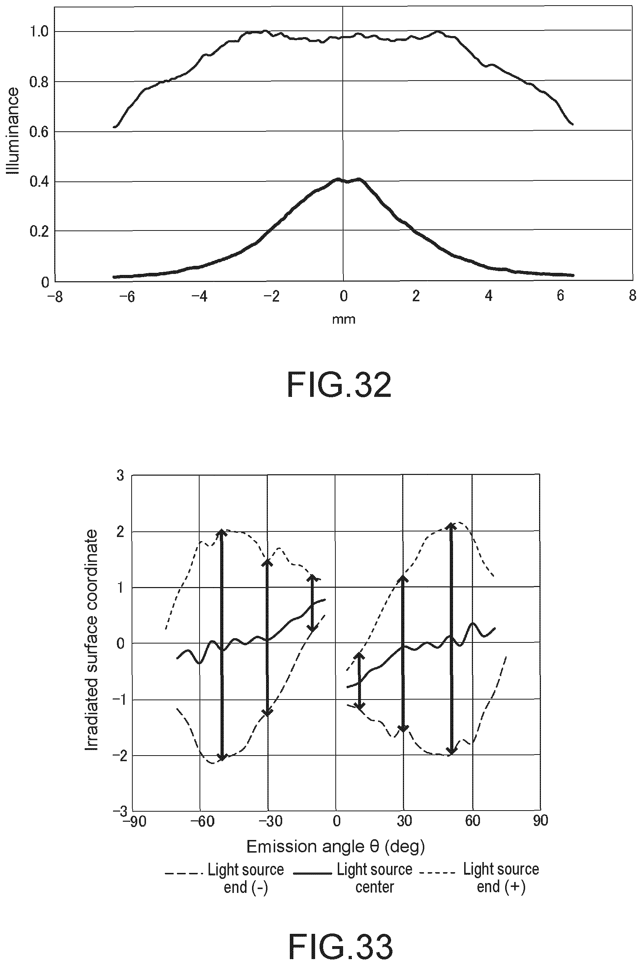

Fig. 32 is a graph showing the illuminance distributions in the H-H lines shown in Fig. 31A and B.

As shown in Fig. 31A and Fig. 32, when one LED 41 is turned on, the illuminance distribution is such that the illuminance is decreased by spreading substantially circular around the optical axis L2. In addition, the decrease in the illuminance is gradually decreased without a sharp decrease.

Furthermore, as shown in Fig. 32, the region where the illuminance is relatively high is spread up to the vicinity of the position of the optical axis L2 of the adjacent LED 41.

Thus, as shown in Fig. 31B and Fig. 32, when all LEDs 41 are turned on, it is possible to irradiate uniform light having sufficiently suppressed illuminance unevenness on the irradiated surface. As a result, it is possible to prevent brightness unevenness from generating in an image projected on a screen or the like and to realize a high-quality image display.

Furthermore, even when the control of the local dimming method is executed, the brightness unevenness is not generated in the image and it is possible to irradiate an illumination light with the power necessary for the required region of the pixel region. As a result, it is possible to realize an improvement in contrast of the image and a reduction in power consumption.

Also, as shown in Fig. 11, even in this embodiment, as the emission angle θ is greater, the reflected light reflected by the inner side surface 46 gently approaches the direction parallel to the optical axis L2. In other words, there is no singularity in which the angle between the reflected light and the optical axis L2 changes suddenly and greatly. As a result, it is possible to sufficiently suppress a generation of a light-dark difference (unevenness) when the emitted light E emitted from the light beam control member 43 (entire light having different emission angles) is irradiated to the irradiated surface.

In addition, the configuration according to the present embodiment also exhibits the effects described in the first embodiment.

### <Third Embodiment>

Fig. 33 is a graph showing a relationship between the emission angle and the optical axis line range when a light beam control member according to a third embodiment of the present technology is used.

The light beam control member according to the present embodiment is obtained by changing the design of the light beam control member 43 according to the first embodiment. As shown in Fig. 33, when compared to the graph in the first embodiment (Fig. 20), the optical axis range M of each of the plurality of lights having the different emission angles θ is set within the range of approximately (-2 to 2) in the irradiation plane coordinates of the vertical axis.

Thus, by setting the optical axis range M for each light having the emission angle θ within a certain range, it is possible to improve a light utilization efficiency and to realize a projector or the like of high brightness.

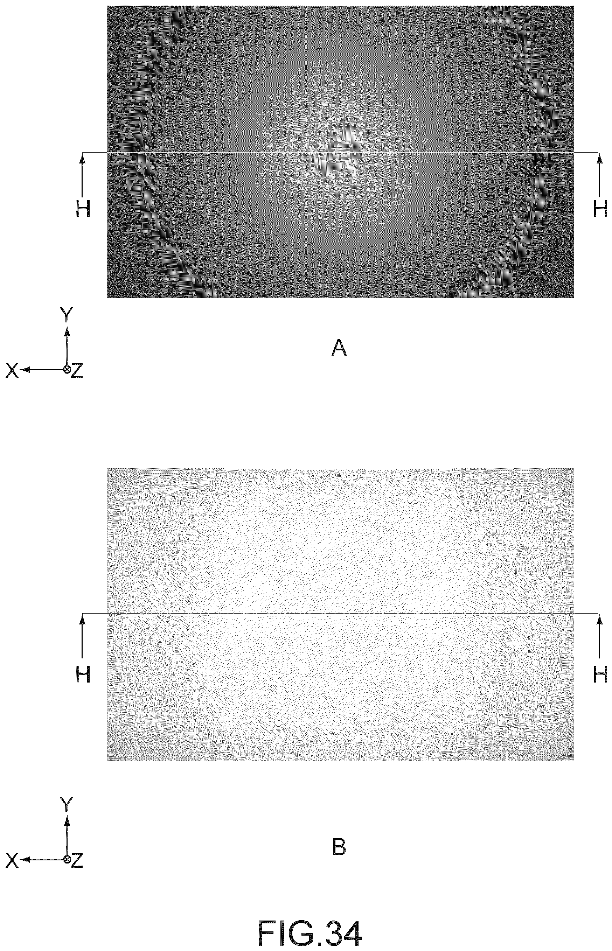

Fig. 34 is schematic views each showing the illuminance distribution of the divergent light E irradiated on the irradiated surface.

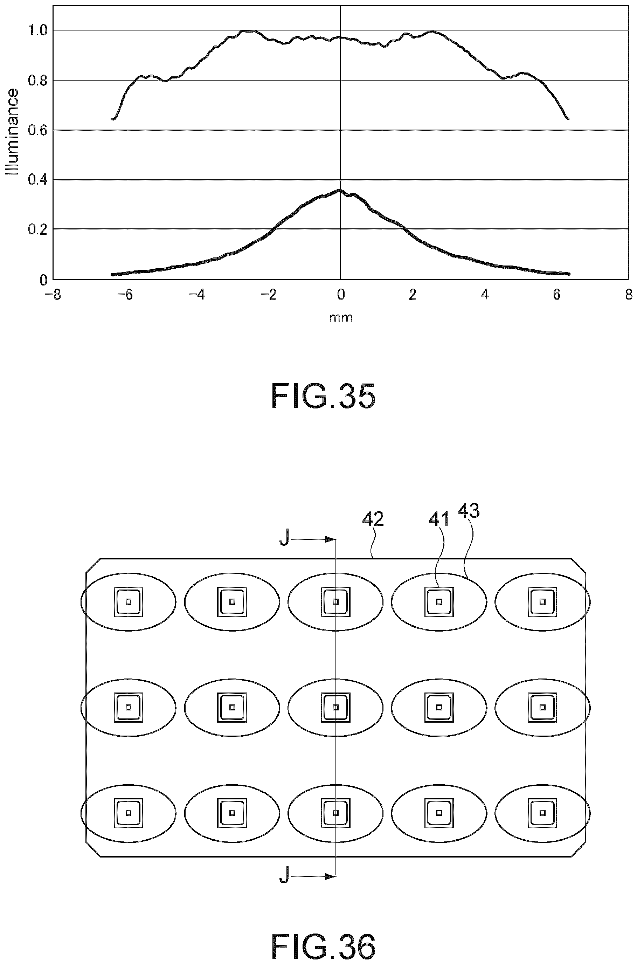

Fig. 35 is a graph showing the illuminance distributions in the H-H lines shown in Fig. 34A and B.

As shown in Fig. 34A and Fig. 35, when one LED 41 is turned on, the illuminance distribution is such that the illuminance is decreased by spreading substantially circular around the optical axis L2. In addition, the decrease in the illuminance is gradually decreased without a sharp decrease.

Furthermore, as shown in Fig. 35, the region where the illuminance is relatively high is spread up to the vicinity of the position of the optical axis L2 of the adjacent LED 41.

Thus, as shown in Fig. 34B and Fig. 35, when all LEDs 41 are turned on, it is possible to irradiate uniform light having sufficiently suppressed illuminance unevenness on the irradiated surface. As a result, it is possible to prevent brightness unevenness from generating in an image projected on a screen or the like and to realize a high-quality image display.

Furthermore, even when the control of the local dimming method is executed, the brightness unevenness is not generated in the image and it is possible to irradiate the illumination light with the power necessary for the required region of the pixel region. As a result, it is possible to realize an improvement in contrast of the image and a reduction in power consumption.

Also, as shown in Fig. 11, even in this embodiment, as the emission angle θ is greater, the reflected light reflected by the inner side surface 46 gently approaches the direction parallel to the optical axis L2. In other words, there is no singularity in which the angle between the reflected light and the optical axis L2 changes suddenly and greatly. As a result, it is possible to sufficiently suppress a generation of a light-dark difference (unevenness) when the emitted light E emitted from the light beam control member 43 (entire light having different emission angles) is irradiated to the irradiated surface.

In addition, the configuration according to the present embodiment also exhibits the effects described in the first embodiment.

### <Other Embodiments>

The present technology is not limited to the above-described embodiments and various other embodiments may be realized.

Fig. 36 is a schematic view showing an outer shape of the light beam control member 43 arranged with respect to the plurality of LEDs 41.

In the above embodiments, the light beam control member 43 is configured in the form of the rotating body having the center axis of the optical axis passing through the center of each LED 41.

As shown in Fig. 36, rather than the rotating body, it is also possible to configure the light beam control member 43 so as to have an elliptical cross-sectional shape.

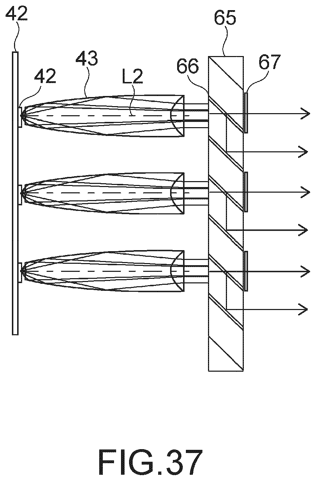

Fig. 37 is a cross-sectional view taken along the line J-J shown in Fig. 36.

For example, a polarization conversion element (PS converter) 65 is arranged at an emission side of each light beam control member 43. The polarization conversion element 65 is arranged by overlapping polarization separating films 66 and 1/2-wavelength plates 67 in a plurality of stages.

A short axis direction of the elliptical cross-section is matched with the direction in which the polarization separation films 66 and the half-wave plates 67 are overlapped. Furthermore, a long axis direction of the elliptical cross-section is aligned with the direction in which the polarization separation films 66 and the 1/2 wavelength plates 67 extend (perpendicular direction to paper plane in Fig. 36). Then, the light beam control member 43 is aligned with light receiving portions of the polarization conversion elements 65.

Thus, the light can be efficiently incident on the polarization conversion elements 65 and it is possible to realize an efficient polarization illumination.

In addition, the cross-sectional shape or the like of the light beam control member 43 may be arbitrarily designed. For example, a rotationally symmetrical shape having the optical axis passing through the center of the LED 41 as the center axis (shape having same configuration when rotated about the center axis (360/n)° (n is an integer of 2 or more)) may be employed.

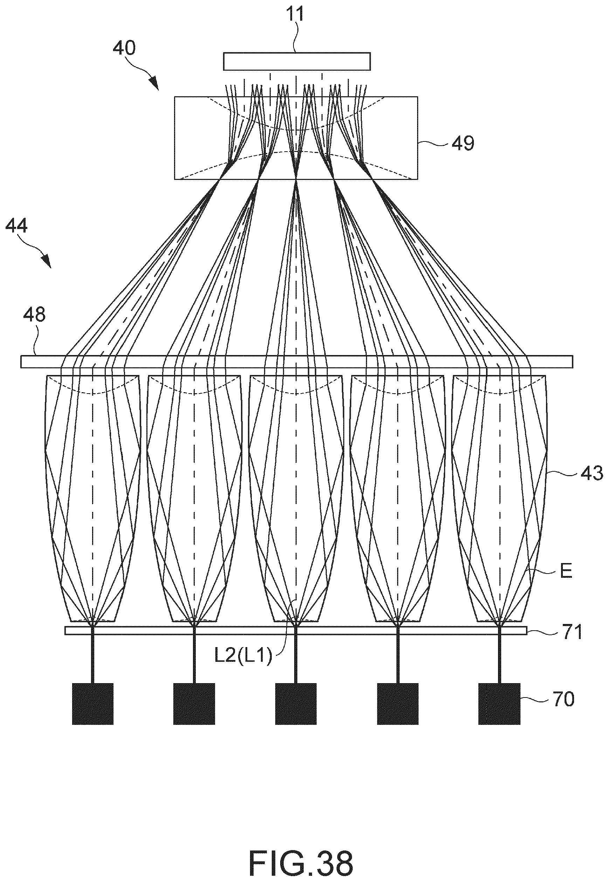

As shown in Fig. 38, instead of the plurality of LEDs, a plurality of LDs (Laser Diode) 70 and a plurality of diffusers (microlens arrays) 71 may be used.

By using the LDs 70, as compared with the LEDs, it is possible to increase light flux density of the light source and to obtain a bright illumination light.

Incidentally, since a beam cross-section of each LD 70 also has a unique shape and a variation, it is possible to alleviate the unevenness by the light beam control member 43 similar to the LEDs.

In a configuration example shown in Fig. 38, light emitting spots of the diffusion plate 71 function as "point light sources". That is, in the configuration example shown in Fig. 38, one or more LDs 70 and the diffuser 71 realize an embodiment of one or more light emitting portions according to the present technology is realized.

For example, the configuration shown in Fig. 38 is employed for the RGB light source units 40R, 40G and 40B shown in Fig. 1. That is, the light source unit 40R including a red LD and the diffuser, the light source unit 40G including a green LD and the diffuser, and the light source unit 40B including a blue LD and the diffuser are employed. Thus, as the image display apparatus according to the present technology, it is possible to realize a projector.

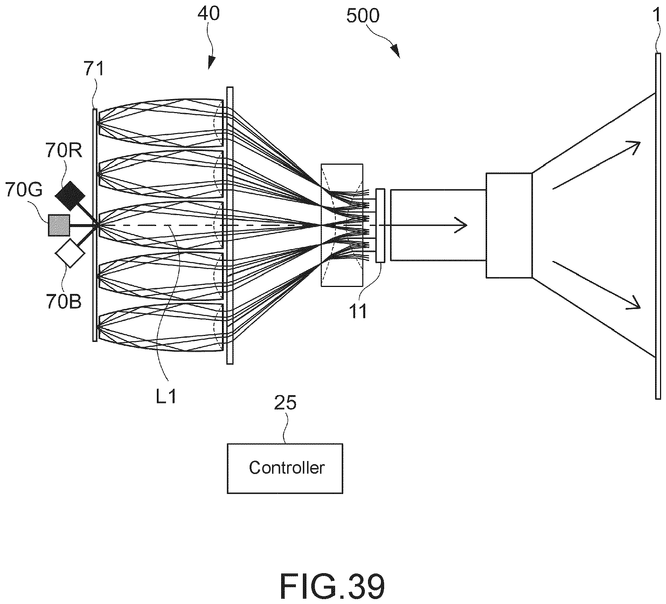

In an image display apparatus 500 shown in Fig. 39, one light source unit 40 is used. In the light source unit 40, the light emitting spots with respect to the incident surface 45 of one light beam control member 43 are in the state in which respective colors of the RGB are mixed.

For example, as shown in Fig. 39, LDs 70R, 70G, and 70B of three colors of RGB irradiate laser beams of respective RGB colors at different angles for the same location of the diffuser 71. Alternatively, three colors of RGB lights may be synthesized by a dichroic prism or the like to perform color mixing of RGB.

For example, by synchronizing a light emission timing of the respective LDs 70R, 70G, and 70B of RGB with an operation of the light modulator 11 of a single plate using the controller 25, it is possible to a color display of a field sequential system. Furthermore, since one light source unit 40 is enough, it is advantageous for reducing the size of the apparatus.

Alternatively, a white LED (e.g., blue LED + phosphor) is arranged instead of the respective LDs 70R, 70G, and 70B of RGB shown in Fig. 39. As the light modulator 11, a device including an RGB color filter is used.

Thus, it is possible to reduce the size of the apparatus. In addition, a color break that may occur in the configuration by the LDs 70R, 70G, and 70B of RGB is also eliminated.

It is not limited to the transmissive light modulator and a reflective light modulator may be used. For example, a liquid crystal panel can be used as the light modulator. Of course, it is not limited thereto and any other device such as an MEMS device (DMD: Digital Mirror Device) may be used.

For example, when a transmissive liquid crystal panel is compared with a reflective liquid crystal panel, the reflective liquid crystal panel tends to relax a pixel mesh feeling.

Also, when the MEMS device (DMD) is used, there is no need for the polarization illumination, which is advantageous for reducing the size and efficiency.

It is also possible to realize an illumination apparatus using the light source apparatus according to the present technology.

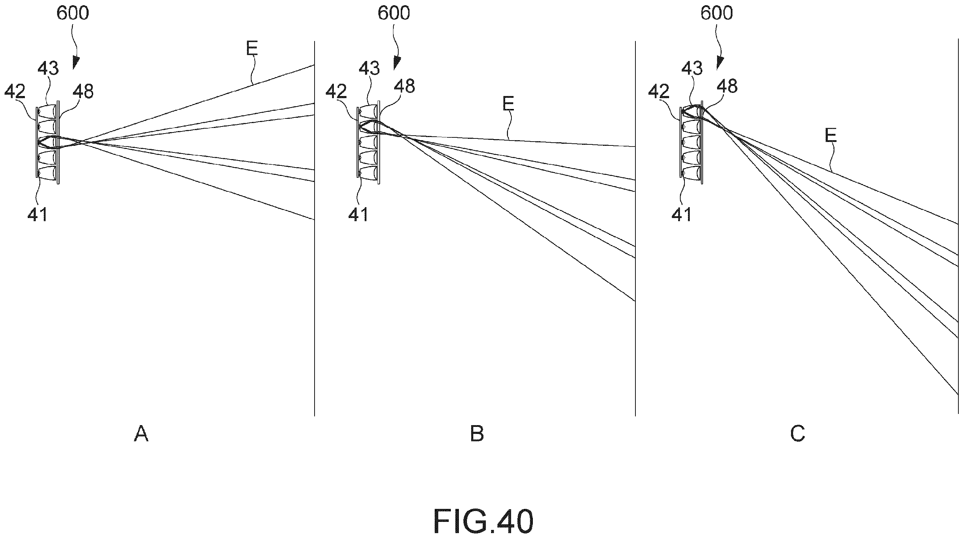

For example, as shown in Fig. 40, it is possible to realize an illumination apparatus 600 by a configuration that the biconcave lens 49 of the magnification changing optical system 44, the light modulator 11, the projection system 20 are not disposed. Incidentally, it is not limited to such a configuration.

By individually driving the LEDs 41, it is possible to irradiate the illumination light E only to certain areas. It is also possible to individually control the power of the illumination light E. Also, by irradiating only the required region at the necessary timing, it is possible to reduce the power consumption.

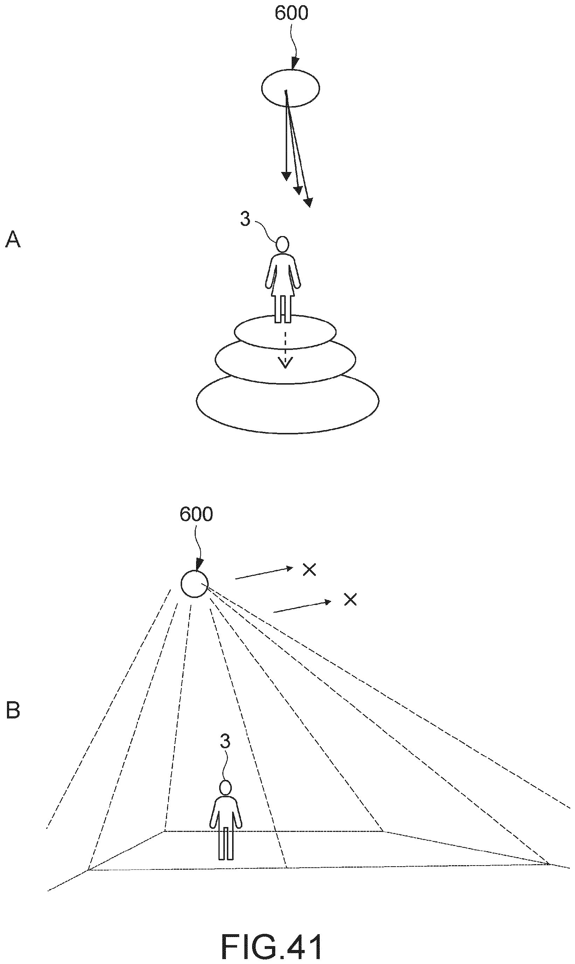

For example, the illumination apparatus 600 according to the present technology is used in combination with a human sensor. Thus, for example, as shown in Fig. 41A, it is possible to detect a movement of a person 3, to anticipate a traveling direction, and to illuminate. In addition, as shown in Fig. 41B, a light is normally dimmed in a dark, and the illuminance can be improved for each area in accordance with the movement of a moving body such as the person 3.

In addition, as represented by cross marks in Fig. 41B, it is also easily possible to suppress the irradiation in unnecessary directions.

It is also possible to use the illumination apparatus 600 according to the present technology for irradiation for photographing (camera flash, etc.). For example, partial illumination such as increased illuminance only in dark areas is available.

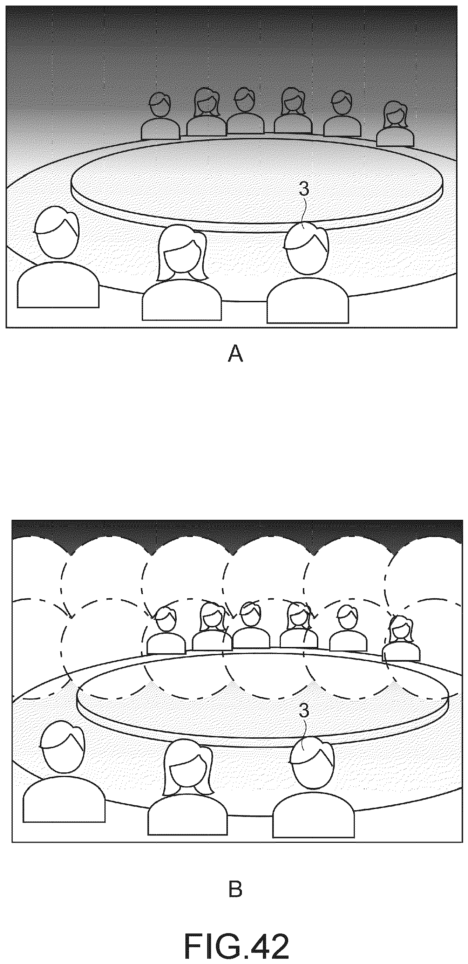

For example, as shown in Fig. 42A, it is assumed that the persons 3 in front of the camera are overexposed and the persons 3 behind the camera are in the dark and invisible with a normal camera flash. In such a case, as shown in Fig. 42B, the dark area on the behind can be illuminated intensively to bring overall brightness closer to a uniform condition. This makes it possible to photograph beautifully the faces of all three people sitting on the table.

In addition, there is no limitation on the fields and devices to which the present technology can be applied, and the present technology may be applied to a variety of image display apparatuses other than the projector, as well as a variety of fields such as medical care, sports, games, lighting in facilities, illumination, and the like.

The image display apparatus described with reference to each drawing, each member included in the image display apparatus, the light source apparatus (light source unit), the light beam control member, each configuration such as the illumination apparatus, driving control of the plurality of light emitting portions, etc. are only embodiments and can be arbitrarily modified by not deviating from the scope of the present technology. In other words, for example, any other configurations or algorithms for practicing the present technology may be employed.

In the above description, the word "substantially" is used as appropriate to describe the shape and the like. This is used merely to facilitate understanding of the description, and the use/non-use of the word "substantially" does not have any particular meaning.

That is, in the present disclosure, concepts defining the shape, the size, the positional relationship, the state, and the like, such as "center," "central," "uniform," "equal," "same," "orthogonal," "parallel," "symmetric," "extended," "axial," "columnar," "cylindrical," "ring," "annular," and the like are concepts including "substantially center," "substantially central," "substantially uniform," "substantially equal," "substantially same," "substantially orthogonal," "substantially parallel," "substantially symmetric," "substantially extended," "substantially axial," "substantially columnar," "substantially cylindrical," "substantially ring," "substantially annular," and the like.

For example, states included in a predetermined range (e.g., ± 10% range) based on "perfect center," "perfect central," "perfectly uniform," "perfectly equal," "perfectly same," "perfectly orthogonal," "perfectly parallel," "perfectly symmetric," "perfectly extended," "perfectly axial," "perfectly columnar," "perfectly cylindrical," "perfectly ring-shaped," "perfectly ring," "perfectly annular," and the like are also included.

Therefore, even when the word "substantially" is not added, a conceptual expressed by adding a so-called "substantially" may be included. On the contrary, a complete state is not excluded for the state represented by the addition of "substantially".

At least two of the features of the present technology described above can also be combined. In other words, any features described in the respective embodiments may be combined interchangeably. Furthermore, the various effects described above are not limitative but are merely illustrative, and other effects may be provided.

The present technology may also have the following structures.
(1) A light source apparatus, including:
   one or more light emitting portions that emit divergent light including a plurality of lights having different emission angles with respect to an optical axis; and
   one or more optical members arranged on the optical axis of each of the one or more light emitting portions, having
      an incident surface on which the divergent light emitted from the light emitting portion is incident,
      an inner side surface that reflects the divergent light incident on the incident surface inside the optical member, and
      an emission surface that emits the divergent light reflected by the inner side surface in a direction of the optical axis,
   in which it is configured such that each of the plurality of lights having different emission angles emitted from the emission surface is irradiated to an irradiation range corresponding to the emission angle with reference to a position of the optical axis, and
   each of the one or more optical members is configured such that a size of the irradiation range corresponding to the emission angle of each of the plurality of lights has a predetermined distribution.
(2) The light source apparatus according to (1), in which the irradiation range corresponding to the emission angle of each of the plurality of lights is configured with the position of the optical axis as a center.
(3) The light source apparatus according to (1) or (2), in which each of the one or more optical members is configured such that a difference between a maximum value and a minimum value of the size of the irradiation range corresponding to the emission angle of each of the plurality of lights is larger than a predetermined threshold value, and the size of the irradiation range corresponding to the emission angle is continuously distributed between the maximum value and the minimum value.
(4) The light source apparatus according to any one of (1) to (3), in which each of the one or more optical members is configured such that a difference between a maximum value and a minimum value of a maximum distance from the position of the optical axis of the irradiation range corresponding to the emission angle of each of the plurality of lights is larger than a predetermined threshold value, and the maximum distance from the position of the optical axis of the irradiation range corresponding to the emission angle is continuously distributed between the maximum value and the minimum value.
(5) The light source apparatus according to any one of (1) to (4), in which each of the one or more optical members is configured such that the irradiation range corresponding to the emission angle of each of the plurality of lights is different from each other.
(6) The light source apparatus according to any one of (1) to (5), in which each of the one or more optical members is configured such that illuminance of the divergent light emitted from the emission surface and irradiated on an irradiated surface arranged on the optical axis becomes maximum at the position of the optical axis on the irradiated surface and continuously decreases as away from the position of the optical axis.
(7) The light source apparatus according to (6), in which each of the one or more optical members is configured such that a ratio of decreasing the illuminance of the divergent light irradiated on the irradiated surface as away from the position of the optical axis falls within a predetermined range.
(8) The light source apparatus according to any one of (1) to (7), in which each of the one or more optical members has a shape of a rotating body having the optical axis as a center axis.
(9) The light source apparatus according to any one of (1) to (8), in which each of the one or more optical members has a bullet shape having the optical axis as the center axis.
(10) The light source apparatus according to any one of (1) to (9), in which the incident surface has a concave shape with a position on the optical axis as an apex, when viewed from a light emitting portion side along the direction of the optical axis.
(11) The light source apparatus according to (10), in which the incident surface has a lens surface protruding on an optical axis side from the apex to an end of the light emitting portion side.
(12) The light source apparatus according to any one of (1) to (11), in which the emission surface has a concave shape with the position on the optical axis as the center, when viewed from a side from which the divergent light is emitted along the direction of the optical axis.
(13) The light source apparatus according to any one of (1) to (12), in which the emission surface has a concave lens surface with respect to the optical axis from the center to an end on the side from which the divergent light is emitted.
(14) The light source apparatus according to any one of (1) to (13), in which the inner side surface is configured to surround the optical axis and has a concave reflective surface with respect to the optical axis.
(15) The light source apparatus according to (14), in which the inner side surface is configured such that an inclination angle with respect to the optical axis changes continuously from an incident surface side to an emission surface side.
(16) The light source apparatus according to (15), in which the inner side surface is configured such that a rate of change of the inclination angle with respect to the optical axis is continuously small from the incident surface to the emission surface in an optical axis cross-section.
(17) The light source apparatus according to any one of (1) to (16), in which each of the one or more light emitting portions has an emission region for emitting the divergent light and emits the divergent light with each point within the emission region as an emission point.
(18) The light source apparatus according to any one of (1) to (17), in which the one or more light emitting portions are a plurality of light emitting portions,
   the one or more optical members are a plurality of optical members, and
   the light source apparatus further includes an emission control portion capable of individually controlling driving of each of the plurality of light emitting portions.
(19) The light source apparatus according to (18), in which the emission control portion is capable of executing a control in a local dimming method.
(20) An image display apparatus, including:
   (a) a light source apparatus including
      one or more light emitting portions that emit divergent light including a plurality of lights having different emission angles with respect to an optical axis, and
      one or more optical members arranged on the optical axis of each of the one or more light emitting portions, having
         an incident surface on which the divergent light emitted from the light emitting portion is incident,
         an inner side surface that reflects the divergent light incident on the incident surface inside the optical member, and
         an emission surface that emits the divergent light reflected by the inner side surface in a direction of the optical axis,
      in which it is configured such that each of the plurality of lights having different emission angles emitted from the emission surface is irradiated to an irradiation range corresponding to the emission angle with reference to a position of the optical axis, and
      each of the one or more optical members is configured such that a size of the irradiation range corresponding to the emission angle of each of the plurality of lights has a predetermined distribution;
   (b) an image generating system that generates an image based on light from the light source apparatus; and
   (c) a projection system that projects an image generated by the image generation system.
(21) The light source apparatus according to (11), in which
   an cross-section of each of the one or more optical members cut along the optical axis is defined as an optical axis cross-section,
   the incident surface has a shape such that two curves protruding to an optical axis side connecting the apex at the incident surface to the end of the light emitting portion side are arranged symmetrically around the optical axis as the center in the optical axis cross-section.
(22) The light source apparatus according to (13), in which
   an cross-section of each of the one or more optical members cut along the optical axis is defined as an optical axis cross-section,
   the emission surface has a shape such that two curves being concave with respect to the optical axis connecting the center at the emission surface to an end of the side from which the divergent light is emitted are arranged symmetrically around the optical axis as the center in the optical axis cross-section.
(23) The light source apparatus according to (16), in which
   an cross-section of each of the one or more optical members cut along the optical axis is defined as an optical axis cross-section,
   the inner side surface is configured such that the inclination angle with respect to the optical axis is continuously changed from the incident surface side toward the emission surface side.

### Reference Signs List

- L1: optical axis of light source unit
- L2: optical axis of LED
- 10: image generating system
- 20: projection system
- 25: controller
- 40: light source unit
- 41: LED
- 43: light beam control member
- 45: incident surface
- 46: inner side surface
- 47: emission surface
- 52: emission point
- 62: optical axis line
- 70: LD
- 71: diffuser (microlens array)
- 500: image display apparatus
- 600: illumination apparatus

## Claims

1. A light source apparatus, comprising:
one or more light emitting portions that emit divergent light including a plurality of lights having different emission angles with respect to an optical axis; and
one or more optical members arranged on the optical axis of each of the one or more light emitting portions, having
an incident surface on which the divergent light emitted from the light emitting portion is incident,
an inner side surface that reflects the divergent light incident on the incident surface inside the optical member, and
an emission surface that emits the divergent light reflected by the inner side surface in a direction of the optical axis,
wherein it is configured such that each of the plurality of lights having different emission angles emitted from the emission surface is irradiated to an irradiation range corresponding to the emission angle with reference to a position of the optical axis, and
each of the one or more optical members is configured such that a size of the irradiation range corresponding to the emission angle of each of the plurality of lights has a predetermined distribution.

2. The light source apparatus according to claim 1, wherein the irradiation range corresponding to the emission angle of each of the plurality of lights is configured with the position of the optical axis as a center.

3. The light source apparatus according to claim 1, wherein each of the one or more optical members is configured such that a difference between a maximum value and a minimum value of the size of the irradiation range corresponding to the emission angle of each of the plurality of lights is larger than a predetermined threshold value, and the size of the irradiation range corresponding to the emission angle is continuously distributed between the maximum value and the minimum value.

4. The light source apparatus according to claim 1, wherein each of the one or more optical members is configured such that a difference between a maximum value and a minimum value of a maximum distance from the position of the optical axis of the irradiation range corresponding to the emission angle of each of the plurality of lights is larger than a predetermined threshold value, and the maximum distance from the position of the optical axis of the irradiation range corresponding to the emission angle is continuously distributed between the maximum value and the minimum value.

5. The light source apparatus according to claim 1, wherein each of the one or more optical members is configured such that the irradiation range corresponding to the emission angle of each of the plurality of lights is different from each other.

6. The light source apparatus according to claim 1, wherein each of the one or more optical members is configured such that illuminance of the divergent light emitted from the emission surface and irradiated on an irradiated surface arranged on the optical axis becomes maximum at the position of the optical axis on the irradiated surface and continuously decreases as away from the position of the optical axis.

7. The light source apparatus according to claim 6, wherein each of the one or more optical members is configured such that a ratio of decreasing the illuminance of the divergent light irradiated on the irradiated surface as away from the position of the optical axis falls within a predetermined range.

8. The light source apparatus according to claim 1, wherein each of the one or more optical members has a shape of a rotating body having the optical axis as a center axis.

9. The light source apparatus according to claim 1, wherein each of the one or more optical members has a bullet shape having the optical axis as the center axis.

10. The light source apparatus according to claim 1, wherein the incident surface has a concave shape with a position on the optical axis as an apex, when viewed from a light emitting portion side along the direction of the optical axis.

11. The light source apparatus according to claim 10, wherein the incident surface has a lens surface protruding on an optical axis side from the apex to an end of the light emitting portion side.

12. The light source apparatus according to claim 1, wherein the emission surface has a concave shape with the position on the optical axis as the center, when viewed from a side from which the divergent light is emitted along the direction of the optical axis.

13. The light source apparatus according to claim 12, wherein the emission surface has a concave lens surface with respect to the optical axis from the center to an end on the side from which the divergent light is emitted.

14. The light source apparatus according to claim 1, wherein the inner side surface is configured to surround the optical axis and has a concave reflective surface with respect to the optical axis.

15. The light source apparatus according to claim 14, wherein the inner side surface is configured such that an inclination angle with respect to the optical axis changes continuously from an incident surface side to an emission surface side.

16. The light source apparatus according to claim 15, wherein the inner side surface is configured such that a rate of change of the inclination angle with respect to the optical axis is continuously small from the incident surface to the emission surface in an optical axis cross-section.

17. The light source apparatus according to claim 1, wherein each of the one or more light emitting portions has an emission region for emitting the divergent light and emits the divergent light with each point within the emission region as an emission point.

18. The light source apparatus according to claim 1, wherein the one or more light emitting portions are a plurality of light emitting portions,
the one or more optical members are a plurality of optical members, and
the light source apparatus further includes an emission control portion capable of individually controlling driving of each of the plurality of light emitting portions.

19. The light source apparatus according to claim 18, wherein the emission control portion is capable of executing a control in a local dimming method.

20. An image display apparatus, comprising:
(a) a light source apparatus including
one or more light emitting portions that emit divergent light including a plurality of lights having different emission angles with respect to an optical axis, and
one or more optical members arranged on the optical axis of each of the one or more light emitting portions, having
an incident surface on which the divergent light emitted from the light emitting portion is incident,
an inner side surface that reflects the divergent light incident on the incident surface inside the optical member, and
an emission surface that emits the divergent light reflected by the inner side surface in a direction of the optical axis,
wherein it is configured such that each of the plurality of lights having different emission angles emitted from the emission surface is irradiated to an irradiation range corresponding to the emission angle with reference to a position of the optical axis, and
each of the one or more optical members is configured such that a size of the irradiation range corresponding to the emission angle of each of the plurality of lights has a predetermined distribution;
(b) an image generating system that generates an image based on light from the light source apparatus; and
(c) a projection system that projects an image generated by the image generation system.
